# FASCICULE DE BREVET EUROPEEN

(11) **EP 3 519 163 B1**
(45) Date de publication et mention de la délivrance du brevet: **09.10.2024**
(21) Numéro de dépôt: 17752156.4
(22) Date de dépôt: 21.08.2017
(51) Int. Cl.: B29C 67/00, B22F 3/105, B28B 1/00, B29C 64/141, B29C 64/159, B29C 64/205, B22F 12/50, B22F 7/06, B22F 3/00, B33Y 10/00, B33Y 30/00

(54) **DISPOSITIF ET MÉTHODE POUR MANIPULER DES PARTICULES**
VORRICHTUNG UND VERFAHREN ZUR MANIPULATION VON PARTIKELN
DEVICE AND METHOD FOR MANIPULATING PARTICLES

(30) Priorité: 29.09.2016 BE 201605725
(43) Date de publication de la demande: 07.08.2019
(73) Titulaire: Aerosint SA, 4040 Herstal (BE)
(72) Inventeur: BEDORET, Alexis, 5150 Franiére (BE); HICK, Matthias, 4830 Limbourg (BE); ECKES, Kevin, 1040 Etterbeek (BE)
(74) Mandataire: Gevers Patents
(86) Numéro de dépôt international: PCT/EP2017/071039
(87) Numéro de publication internationale: WO 2018/059833

(56) Documents cités:
- WO-A1-95/26871
- WO-A2-2008/028443
- DE-U1- 9 018 138
- US-A- 5 637 176
- US-A1- 2004 084 814

## Description

### Domaine technique

Selon un premier aspect, la présente invention concerne un dispositif pour manipuler des particules. Selon un deuxième aspect, la présente invention concerne une méthode pour manipuler des particules.

### Art antérieur

Le document US5767877 divulgue un dispositif pour manipuler des particules. Ce dispositif connu comprend une matrice d'impression bidimensionnelle destinée à recevoir des particules de toner. Chacun des pixels de la matrice comprend une vanne et une cavité. Les cavités sont séparées les unes des autres par une partie de surface. La matrice forme ainsi un support ayant une première surface extérieure présentant des ouvertures dans lesquelles viennent se placer les particules de toner. Les particules de toner sont aspirées dans les cavités pour lesquelles les vannes sont ouvertes. Chaque cavité est prévue pour recevoir une seule particule de toner. Lorsqu'une particule est dans une cavité, elle bouche son conduit d'aspiration, empêchant l'aspiration d'autres particules.

Ce dispositif connu présente plusieurs problèmes. Premièrement, les particules doivent avoir une forme essentiellement sphérique, de façon à pouvoir pénétrer dans les cavités et boucher les conduits d'aspiration. Ensuite, les particules doivent avoir sensiblement toutes la même taille, de façon à pouvoir pénétrer dans les cavités et boucher les conduits d'aspiration. En outre, les séparations entre les cavités font que ce dispositif ne permet pas de constituer une structure continue de particules. Le document US 2004/0084814 A1 divulgue un dispositif pour manipuler des particules selon le préambule de la revendication 1.

### Résumé de l'invention

Selon un premier aspect, un des buts de l'invention est de fournir un dispositif permettant de créer une structure continue de particules de tailles et de formes diverses. A cet effet, l'invention propose un dispositif pour manipuler des particules selon la revendication 1.

Un tamis permet que la structure de particules soit formée par des particules s'amassant contre la première surface extérieure et non dans le tamis. Comme cette première surface extérieure est uniquement "extérieure", elle ne comprend pas les parois "intérieures" des trous. Ainsi, des particules de tailles, formes et matériaux variés peuvent être incluses dans la même structure de particules contre la première surface extérieure du tamis. En effet, il n'y a pas de condition sur le matériau, la taille ou la forme des particules. En outre, les particules peuvent être les unes contre les autres, sans séparation entre elles, ce qui permet qu'elles forment une structure continue de particules. Elles peuvent aussi s'amasser dans une direction perpendiculaire à la première surface extérieure du tamis, formant ainsi une structure d'une certaine épaisseur.

Dans le cadre de la présente demande, un tamis est un média poreux perméable au fluide (selon l'invention le tamis comporte des trous traversants dans lesquels le fluide peut passer) et dont au moins une première surface extérieure est impénétrable par les particules de la structure (c'est-à-dire que les particules restent bloquées contre ladite première surface extérieure et ne pénètrent pas dans le tamis).

Le tamis, et en particulier sa première surface extérieure, sert de support pour la structure de particules.

Conformément à la revendication 1, le tamis comporte des trous traversant et débouchant sur la première surface extérieure par des ouvertures. Les trous et leurs ouvertures sont agencés pour laisser passer au moins partiellement le flux de fluide de transport à travers le tamis, et les ouvertures, par leur forme et leur disposition sur la première surface extérieure, sont agencées pour bloquer les particules. De préférence, les trous et leurs ouvertures sont agencés pour laisser passer tout le flux de fluide de transport à travers le tamis. De préférence, les trous traversent le tamis dans son épaisseur, c'est-à-dire selon une direction essentiellement perpendiculaire localement à la première surface extérieure. Préférentiellement, le tamis présente une deuxième surface extérieure essentiellement parallèle à la première surface extérieure et l'épaisseur du tamis est délimitée par les première et deuxième surfaces extérieures.

En d'autres termes, les ouvertures dans la première surface extérieure du tamis sont agencées pour que la première surface extérieure bloque les particules en-dehors du tamis, tout en laissant passer le flux de fluide de transport via les trous à travers le tamis. Les particules sont alors bloquées à l'extérieur du tamis et non dans les trous du tamis. Ainsi, la première surface extérieure du tamis est prévue pour que la structure de particules puisse se former contre elle.

Dans le cadre de la présente demande, la première surface extérieure du tamis est entendue comme ne comprenant pas les parois intérieures des trous dans le tamis, puisque la première surface extérieure est une surface uniquement extérieure. Ainsi, les particules sont bloquées contre les parties non-trouées de la première surface extérieure du tamis.

La première surface extérieure du tamis peut être essentiellement plane. La première surface extérieure du tamis peut être telle qu'un segment de droite qui relie deux points de la première surface extérieure du tamis est entièrement compris dans la première surface extérieure du tamis. La première surface extérieure du tamis peut être convexe. La première surface extérieure du tamis peut être essentiellement cylindrique.

Avec le dispositif selon l'invention, il est possible de manipuler des particules individuellement ou des ensembles de particules.

Il est possible de contrôler l'épaisseur de la structure de particules, par exemple par raclage ou par contrôle du flux de transport.

Le dispositif selon l'invention est apte à manipuler des particules et à créer une structure de particules.

Dans un mode de réalisation de l'invention, le dispositif permet de déposer sélectivement une partie de la structure de particules, par exemple sur un premier substrat.

Dans le cadre de la présente demande, un "pixel" est une partie d'une surface, par exemple de la première surface extérieure du tamis, qui peut être couverte de particules indépendamment du reste de ladite surface. Un pixel est donc une partie adressable d'une surface, par exemple de la première surface extérieure du tamis. Dans le cadre de la présente demande, un "voxel" est une partie de la structure de particules qui correspond à un pixel.

Le flux de fluide de transport peut être vu, à un instant donné, comme un ensemble d'éléments de flux de fluide, chaque élément de flux correspondant de préférence à un pixel différent. De préférence, chaque élément de flux de fluide de transport a une section essentiellement carrée ou ronde. Cela permet que les pixels aient une étendue approximativement uniforme dans toutes les directions.

Les particules peuvent par exemple comprendre un polymère, un métal, un sel, une céramique ou un matériau organique. Elles peuvent avoir une distribution de taille avec une taille moyenne de 1 µm, 10 µm, 100 µm, 1 mm ou 10 mm. Elles peuvent avoir une forme essentiellement sphérique ou toute autre forme. Les particules peuvent être adéquates pour former un objet par impression tridimensionnelle par un procédé d'agglomération sélective. Les particules peuvent, au contraire, être inertes et difficiles à agglomérer pour servir de support lors d'une impression tridimensionnelle.

Le tamis peut être fait de matières différentes (métal, organique, polymère, céramique,...), et fabriqué par différents procédés (tissage, perforations, poinçonnage, photogravure chimique, électroformage de métal (nickel, cuivre, or,...), poudre ou fibres fritées, mousse de filtration,...).

Dans le cadre du présent document, une "couche de particules" peut être la structure de particules formée contre la première surface extérieure du tamis ou peut être créée sur un premier substrat à partir de la structure de particules formée sur la première surface extérieure du tamis. Une couche de particules peut aussi être appelée strate, notamment après une déposition à partir de la première surface extérieure du tamis. La couche de particule est une couche essentiellement continue de particules formant une "image" de particules.

Le premier substrat peut comprendre des particules préalablement agglomérées et/ou un objet solide à intégrer avec des particules.

La création de la structure de particules peut être dénommée "composition".

Le dispositif comprend préférentiellement une alimentation en particules fournissant des particules de taille suffisante pour être bloquées par la première surface extérieure du tamis.

La première surface extérieure du tamis est préférentiellement la surface du tamis située à l'opposé du générateur de flux.

Le dispositif peut en outre comporter un système de purge pour laver le tamis profondément. Il peut par exemple s'agir d'une bande d'aspiration prévue pour être mise en contact ou disposée à proximité du tamis. Le système de purge peut par exemple comprendre un aspirateur, une lame d'éjection dans un espace intérieur du tamis si la première surface extérieure du tamis est convexe ou une lame d'aspiration à l'extérieur du tamis si la première surface extérieure du tamis est convexe.

Les ouvertures des trous peuvent être agencées pour bloquer tout corps sphérique de plus de 1 mm de diamètre, préférentiellement de 10 µm de diamètre, plus préférentiellement 1 µm de diamètre, encore plus préférentiellement 0,1 µm de diamètre, en dehors du tamis.

Les ouvertures des trous peuvent être telles que le diamètre du plus petit cercle circonscrit à n'importe laquelle desdites ouvertures est plus petit que le diamètre de la plus petite sphère inscrite dans n'importe laquelle des particules.

Cette condition est suffisante pour qu'aucune particule ne pénètre dans aucune ouverture.

Préférentiellement, le tamis est une grille.

Cela permet que le tamis soit particulièrement simple et bon marché. Une grille comprend par exemple une pluralité d'éléments qui se croisent en formant un maillage. Une grille peut être régulière ou irrégulière.

Conformément à la revendication 1, le dispositif est agencé pour que le flux de fluide de transport ne traverse que des parties prédéterminées de la première surface extérieure du tamis.

Cela permet notamment que plusieurs types de particules soient bloquées contre la première surface extérieure, dans des parties différentes de la première surface extérieure. Ainsi la structure de particules peut comprendre au moins une première partie comprenant uniquement des particules d'un premier type et une deuxième partie comprenant uniquement des particules d'un deuxième type. Les types de particules se différencient par exemple par au moins un de : leur distribution de taille, leur matériau, leur forme, leur couleur, leur module de Young, leur masse volumique, leur conductivité thermique, leur conductivité électrique, leur perméabilité magnétique, leur résistance à la corrosion, leur dureté, leur température de fusion, leur solubilité, leur combustibilité, leur hydrophobie, leur composition chimique.

Cela permet aussi que les particules forment un motif précis sur la première surface extérieure, ce motif correspondant aux parties de la première surface extérieure traversées par le flux de fluide de transport, potentiellement lors de plusieurs étapes.

Dans une réalisation de l'invention, le dispositif comprend un moyen de déplacement du générateur de flux.

Cela permet de modifier les parties de la première surface extérieure traversées par le flux de fluide de transport. Les parties de la première surface peuvent également être appelées "sous-surfaces".

Dans une réalisation de l'invention, le dispositif comprend un masque entre le générateur de flux et le tamis.

Le masque permet de choisir quelles parties de la première surface extérieure sont soumises au flux de fluide de transport. En effet, les parties de la première surface extérieure masquées ne sont pas traversées par le flux de fluide de transport. Le masque peut être statique, c'est-à-dire que sa structure n'est pas modifiable. Le masque peut être dynamique, c'est-à-dire que sa structure peut être modifiée, par exemple par adressage. Le masque, qu'il soit statique ou dynamique, peut être mobile. Le masque peut correspondre à toute la première surface extérieure ou seulement à une partie de celle-ci. Si le masque est flexible, le tamis permet préférentiellement de lui apporter une certaine rigidité. Le masque est préférentiellement détachable du tamis. Ainsi, il est possible d'éviter d'exposer le masque à une ambiance pouvant l'endommager (température, humidité, poussière,...). Par exemple, détacher le masque avant un frittage peut être intéressant pour lui éviter la température liée au frittage.

La taille d'un pixel dépend des caractéristiques du flux de fluide de transport et des distances entre le masque, le générateur de flux et le tamis.

Dans une réalisation de l'invention, le dispositif comprend un moyen de déplacement du masque.

Cela peut être particulièrement utile lorsque le masque ne correspond qu'à une partie de la première surface extérieure. Le moyen de déplacement du masque peut être couplé avec le moyen de déplacement du générateur de flux pour que le flux de fluide de transport et le masque correspondent systématiquement aux mêmes parties de la première surface extérieure. Le masque est préférentiellement déplacé parallèlement à la première surface extérieure. Le déplacement du masque peut aussi permettre d'obtenir une meilleure résolution et de diminuer les coûts de fabrication. Un déplacement du générateur de flux peut aussi permettre d'obtenir une meilleure résolution et de diminuer les coûts de fabrication.

Dans une réalisation de l'invention, le masque est agencé pour que la configuration de ses parties ouvertes et fermées puisse être modifiée.

Selon la revendication 1, le dispositif comprend une matrice de vannes. Par exemple, le masque comprend une matrice de vannes. Chaque vanne est adressable indépendamment des autres vannes. Chaque vanne est agencée pour contrôler un élément de flux de fluide de transport.

Dans un mode de réalisation, la taille de chaque vanne correspond à la taille d'un pixel. Dans un autre mode de réalisation, la taille d'une vanne est inférieure ou supérieure à la taille d'un pixel. Une vanne ouverte permet de laisser passer le flux de fluide de transport afin d'aspirer les particules vers la première surface extérieure ou de souffler les particules depuis la première surface extérieure. L'utilisation d'un tamis distinct de la matrice de vannes permet de protéger la matrice de vannes de l'environnement de travail (chaleurs, radiations, chocs, humidité, effets électrostatiques). En outre, le tamis peut être changé lors d'un entretien sans qu'il ne soit nécessaire de changer la matrice et la matrice peut être changée sans qu'il ne soit nécessaire de change le tamis. La matrice de vannes est préférentiellement parallèle à la première surface extérieure.

Les vannes peuvent par exemple être des vannes solénoïdes, des micro-parleurs, des MEMS (piézo, électrostatiques, solénoïdes,...).

Dans une réalisation de l'invention, le dispositif comprend un moyen de déplacement du générateur de flux, un masque entre le générateur de flux et le tamis et un moyen de déplacement du masque, le moyen de déplacement du masque étant couplé avec le moyen de déplacement du générateur de flux pour que le flux de fluide de transport et le masque correspondent aux mêmes parties de la première surface extérieure.

Dans une réalisation de l'invention, le générateur de flux comprend un dispositif d'aspiration prévu pour créer le flux de fluide de transport depuis la première surface extérieure vers le générateur de flux.

Cela permet d'aspirer les particules vers la première surface extérieure, c'est-à-dire de les y attirer.

Le dispositif peut comprendre un réservoir de particules.

Le réservoir permet l'alimentation du flux de transport en particules. Le réservoir est agencé de façon telle que le flux aspirant les particules puisse les aspirer depuis le réservoir. Le réservoir peut comprendre une surface plane, située face à la première surface extérieure, et sur laquelle les particules sont distribuées.

Dans une réalisation de l'invention, le générateur de flux comprend un dispositif d'éjection prévu pour créer le flux de fluide de transport depuis le générateur de flux vers la première surface extérieure.

Cela permet d'éjecter les particules depuis la première surface extérieure, c'est-à-dire de les en éjecter. De préférence, le flux de fluide de transport traverse le tamis depuis la deuxième surface extérieure vers la première surface extérieure afin d'éjecter les particules présentes sur la première surface extérieure. Le dispositif d'éjection peut par exemple comprendre une soufflerie ou un émetteur d'ondes sonores. Le dispositif d'éjection peut par exemple être agencé pour éjecter le fluide de transport par impulsions de 0,1 ms à 1 s. Le flux de fluide de transport est choisi pour rompre la force de retenue ou d'adhésion entre la première surface extérieure et les particules.

Le dispositif peut comprendre en outre un collecteur de particules agencé pour récolter les particules provenant de la première surface extérieure.

Le dispositif peut comprendre un moyen d'étalement des particules contre la première surface extérieure du tamis.

Ce moyen d'étalement permet d'alimenter la première surface extérieure en particules. L'étalement peut se faire pour une structure particules située sur le tamis ou sous le tamis. Le moyen d'étalement peut comprend un racloir qui permet que la structure de particules soit approximativement uniforme et contrôlée par le raclage.

La première surface extérieure du tamis peut s'étendre essentiellement selon une première direction et une deuxième direction perpendiculaire à la première direction et en ce que le générateur de flux est agencé pour que le flux de fluide de transport qu'il génère soit essentiellement selon une troisième direction perpendiculaire aux première et deuxième directions.

Cela permet d'avoir une première surface extérieure essentiellement plane. Le masque, s'il y en a un, est alors préférentiellement aussi essentiellement plan.

Dans une réalisation de l'invention, la première surface extérieure du tamis est essentiellement une surface convexe, par exemple un cylindre, délimitant au moins partiellement un espace intérieur.

De préférence, la surface convexe est refermée sur elle-même pour former une boucle. Cela peut par exemple être un cône, un cylindre, une surface de convoyage, un tapis ou une courroie. De préférence, le dispositif est agencé pour que la surface convexe puisse tourner, de façon à ce qu'une partie de la surface convexe puisse se déplacer de façon cyclique afin d'apporter en continu des particules vers une zone de détachement.

Cela permet une création de la structure de particules et une déposition de celle-ci sur un premier substrat en continu.

Dans une réalisation de l'invention, le générateur de flux est au moins partiellement situé dans l'espace intérieur de la surface convexe.

De préférence, le dispositif est agencé pour que le tamis cylindrique puisse tourner autour de son axe. Le cylindre est de préférence creux.

Dans une réalisation de l'invention, le générateur de flux comprend une première partie située dans l'espace intérieur et une deuxième partie située en-dehors de l'espace intérieur, la première partie et la deuxième partie étant reliées de façon fluidique par un moyen de communication fluidique.

Le moyen de communication fluidique comprend de préférence un tuyau ou une pluralité de tuyaux. Il est préféré que le moyen de communication fluidique passe par une extrémité de la surface convexe, par exemple du cylindre, pour faire la jonction entre la première et la deuxième parties du générateur de flux.

Dans un mode de réalisation, la première partie du générateur de flux est à une position fixe par rapport à un axe de rotation de la surface convexe. Dans un autre mode de réalisation, le dispositif est configuré pour que la première partie du générateur de flux puisse se déplacer par rapport à cet axe de rotation. Par exemple, il est possible que la première partie du générateur de flux soit agencée pour faire un mouvement de translation parallèle et/ou perpendiculaire à l'axe de rotation de la première surface extérieure convexe du tamis, par exemple du tamis cylindrique.

Par exemple, un mouvement de translation parallèle à l'axe permet que chacune des ouvertures de la première partie du générateur de flux puisse déposer des particules sur plusieurs lignes parallèles.

La première partie du générateur de flux peut aussi être appelée « tête d'impression ». La première partie du générateur de flux est de préférence au moins partiellement située entre l'axe de rotation et la partie du tamis depuis laquelle les particules sont éjectées.

Dans un mode de réalisation de l'invention, la première partie du générateur de flux est un support rigide permettant de regrouper les moyens de communication fluidique et de diriger le flux de fluide de transport vers une partie spécifique du tamis. De préférence, chaque moyen de communication fluidique correspond à un élément de flux de fluide de transport. La première partie du générateur de flux permet d'aligner les moyens de communication fluidique afin que les éléments de flux de fluide aient une direction essentiellement parallèle et de préférence, essentiellement perpendiculaire à la première surface extérieure du tamis.

Le nombre d'éléments de flux de fluide peut être supérieur au nombre de moyens de communication fluidique. Par exemple, il peut n'y avoir qu'un seul tuyau entre la première et la deuxième parties du générateur de flux et la première partie du générateur de flux peut comprendre une pluralité de vannes adressables. Chaque élément de flux de fluide correspond alors à une vanne. Le dispositif comprend alors de préférence un moyen de communication électrique permettant de contrôler les vannes. Ce moyen de communication électrique peut être, par exemple, un câble passant par une extrémité de la première surface extérieure convexe, par exemple par une extrémité du cylindre.

De préférence, le flux de fluide de transport et en particulier les éléments flux de fluide de transport sont perpendiculaires à la première surface extérieure du tamis dans la zone de détachement où les particules sont entraînées par le flux de fluide de transport.

Dans une réalisation de l'invention, la première partie ou la deuxième partie du générateur de flux comprend une pluralité de vannes.

Par exemple, la première ou la deuxième partie du générateur de flux peut comprendre une matrice de vannes. Si c'est la deuxième partie qui comprend des vannes, chaque vanne peut être reliée à un moyen de communication fluidique. Chaque élément de flux de fluide correspond à une vanne.

Dans une réalisation de l'invention, chaque vanne est agencée pour contrôler un élément de flux de fluide de transport agencé pour traverser une partie de la première surface extérieure du tamis. Cela permet un contrôle précis des particules à éjecter ou aspirer.

Dans une réalisation de l'invention, la première partie du générateur de flux comprend une pluralité d'ouvertures dirigées vers la première surface extérieure du tamis, le dispositif étant agencé pour qu'un élément de flux de fluide de transport passe dans une desdites ouvertures. De préférence, chaque ouverture est en communication fluidique avec une vanne.

Dans un mode de réalisation, le tamis apporte en continu de la matière en face des ouvertures, qui déposent de façon contrôlée des particules sur le premier substrat. Le contrôle de l'épaisseur des particules déposées peut notamment se faire par la position d'un deuxième racloir et/ou par le contrôle de la vitesse de rotation du tamis.

Chaque ouverture est capable de déposer une ligne de particules. Si le flux de fluide de transport est fait d'impulsions, chaque ouverture est capable de déposer une ligne de pixels.

Les ouvertures de la première partie du générateur de flux peuvent être disposées en quinconce.

Dans une réalisation de l'invention, le dispositif comprend en outre un moyen d'aspiration agencé pour retenir les particules sur la première surface extérieure.

Ce moyen d'aspiration peut être, par exemple, un dispositif qui crée une dépression dans l'espace intérieur délimité par la première surface extérieure convexe. Ce dispositif pour créer une dépression peut par exemple comprendre un ventilateur.

Dans une réalisation de l'invention, le dispositif comprend en outre un moyen de déplacement du tamis, par exemple en rotation et/ou translation.

De préférence, ce moyen de déplacement permet de translater le tamis ayant une première surface extérieure convexe dans une direction perpendiculaire à son axe de rotation, par exemple à l'axe du tamis cylindrique. Par exemple, si cet axe est horizontal, ce moyen de déplacement peut être agencé pour déplacer le tamis horizontalement et/ou verticalement. En outre, il est aussi possible que ce moyen de déplacement permette de translater le tamis dans une direction parallèle à son axe de rotation.

Dans une réalisation de l'invention, le fluide est un gaz.

Dans une réalisation de l'invention, le fluide est un liquide.

Le tamis peut comprendre des trous traversants et perpendiculaires à la première surface extérieure du tamis, préférentiellement les trous sont des prismes droits ou des cylindres droits.

Le fait que les trous aient des parois intérieures perpendiculaires à la première surface extérieure permet que les particules ne soient pas bloquées dans les trous.

En outre, l'invention propose un système d'impression tridimensionnelle selon la revendication 12 comprenant:
- au moins un dispositif selon un des modes de réalisation de l'invention, et
- un moyen d'agglomération.

Le système d'impression tridimensionnelle peut par exemple comprendre deux, trois, quatre,... dispositifs ayant chacun un tamis ayant une première surface extérieure convexe.

De préférence, le dispositif permet alors de déposer au moins une partie d'une strate de particules et le moyen d'agglomération permet d'agglomérer au moins une partie de la strate de particules.

Dans le cadre de la présente demande, une strate de particules est une couche de particules. Par exemple, une strate peut être au moins partiellement déposée grâce à un ou plusieurs dispositif(s) pour manipuler des particules selon un mode de réalisation de l'invention.

Le système d'impression tridimensionnelle selon l'invention présente de nombreux avantages, dont :
- il est possible de former des gradients de matériaux,
- il est possible de former des strates résistantes à la corrosion, et
- il est possible de créer des liaisons mécaniques, non-chimiques, entre deux matériaux différents,
- les voxels constituant les pièces imprimées peuvent avoir des formes différentes et être constitués de différentes matières, ces matières pouvant répondre à des fonctions différentes (couleur, module de Young, masse volumique, conductivité thermique, conductivité électrique, perméabilité magnétique, résistance à la corrosion ou à la fatigue, dureté, température de fusion, solubilité, combustibilité, mouillabilité, composition chimique, ou toute autre caractéristique physique).

Dans un mode de réalisation, le système d'impression tridimensionnelle comprend en outre un moyen d'uniformisation de la hauteur de la strate de poudre déposée sur la structure d'impression tridimensionnelle. Cela peut par exemple être une lame qui racle les particules formant des protubérances, un rouleau de compaction qui rend la strate plus compacte, une plaque de compaction qui rend la strate plus compacte et/ou un générateur de vibrations qui aplatit la strate. Par exemple, le rouleau de compaction lui-même peut être vibrant pour fluidiser la poudre et améliorer le raclage (meilleur état de surface et raclage plus rapide). Le moyen d'uniformisation peut être recouvert d'un revêtement antiadhésif afin d'éviter que les particules n'y adhèrent.

De préférence, le système d'impression tridimensionnelle comprend un dispositif pour créer une atmosphère interne, par exemple une atmosphère d'azote. Cela permet de limiter les risques d'explosion et d'oxydation et/ou d'altération de la poudre. De préférence, le réservoir de poudre, le tamis et la structure d'impression tridimensionnelle sont dans cette atmosphère inerte.

De préférence, le système d'impression tridimensionnelle comprend une enceinte qui entoure le réservoir de particules, le tamis et la structure d'impression tridimensionnelle. De préférence, pour de la poudre polymère semi-cristallin, l'intérieur de cette enceinte est chauffé à une température supérieure à la température de cristallisation de la poudre et inférieure à la température de fusion de la poudre. Cela permet de limiter toute déformation de la pièce en construction car une température trop haute détériorerait la qualité du raclage de la poudre. Par exemple, cette température peut être proche de 178°C pour une poudre PA12.

Le système d'impression tridimensionnelle selon l'invention est compatible avec tout matériau.

La poudre utilisée pour former la pièce en construction peut comprendre au moins un des matériaux suivants : un polymère (par exemple :TPE, PP, PA12, PA6, TPU, TPU conducteur, PEEK, PPS), un métal (titane, acier, aluminium, cuivre, palladium, or, chrome, magnésium, cobalt, argent, alliage...), une céramique (silice, alumine,...), un sel ou une poudre organique.

Le système d'impression tridimensionnelle selon l'invention permet un dépôt sélectif de particules d'un premier type et d'un deuxième type différent du premier type. Les particules des différents types sont de préférence éjectées de façon à former une strate continue et sans trou de particules sur la structure d'impression tridimensionnelle.

Par exemple, les particules du premier type peuvent être prévues pour être frittées afin de former l'objet en construction et les particules du deuxième type peuvent être inertes lors du frittage. Il est aussi possible que deux types de particules servent à la construction de l'objet, ce qui permet de créer un objet multi-matières. Cela permet de créer un objet ayant certaines parties en matériau conducteur et d'autres en matériau non-conducteur, un objet ayant des parties rigides et des parties flexibles, un objet ayant plusieurs couleurs, plusieurs états de surface, un objet ayant des parties solubles et des parties insolubles, un objet ayant des parties magnétiques et des parties non-magnétiques.

De préférence, le système d'impression tridimensionnelle comprend un moyen de déplacement de la structure d'impression tridimensionnelle et/ou du premier substrat. Ce moyen de déplacement peut permettre au moins un parmi : une translation verticale, une translation horizontale dans une première direction, par exemple gauche-droite, une translation horizontale dans une deuxième direction, par exemple avant-arrière.

Le moyen d'agglomération permet de faire adhérer au moins une partie des particules déposées à la structure d'impression tridimensionnelle, de façon à ce que ces particules soient intégrées dans cette structure d'impression tridimensionnelle. Dans le cadre de la présente demande, une agglomération de particules est une fixation ensemble desdites particules. Une agglomération est préférentiellement sélective, en ce sens que des particules inertes ne sont pas agglomérées. Une agglomération peut comprendre au moins un procédé parmi les suivants: un traitement thermique, un frittage, une fusion, une application de colle, une application de liant. Par exemple, le moyen d'agglomération peut comprendre au moins un parmi : un four, un laser, un faisceau d'électrons, un laser équipé d'un système de balayage pour pouvoir chauffer l'ensemble de la strate, une lampe halogène, une réaction chimique locale ou uniforme. L'agglomération peut être réalisée de manière uniforme ligne par ligne, en balayant dans une seule direction avec un faisceau chauffant la matière selon une ligne. Le moyen d'agglomération peut bouger en même temps que les tamis, ou être découplé de ceux-ci.

De préférence, le système est agencé pour que le moyen d'agglomération agglomère les particules en-dehors de la zone de détachement où les particules sont déposées sur la structure d'impression tridimensionnelle.

Le système d'impression tridimensionnelle peut comprendre en outre un moyen de déposition de la structure de particules présente contre la première surface extérieure du tamis. En outre, le moyen de déposition peut être le dispositif d'éjection.

Le moyen de déposition, qui peut faire partie du dispositif pour manipuler des particules, peut permettre de former une strate de particules.

Le moyen de déposition permet de décrocher la structure de particules de la première surface extérieure du tamis. Le moyen de déposition permet préférentiellement de déposer la structure de particules contre une structure d'impression tridimensionnelle, préférentiellement sur une structure d'impression tridimensionnelle. Il permet aussi éventuellement de déplacer le tamis, par exemple verticalement, pour que la structure de particules de la première surface extérieure soit contre la structure d'impression tridimensionnelle. Le moyen de déposition de la structure de particules peut par exemple comprendre le générateur de flux, notamment si celui-ci est un dispositif d'éjection.

Le moyen de déposition peut comprendre un substrat de transfert mobile ayant une surface de transfert pouvant être positionnée face à la première surface extérieure du tamis de façon à ce qu'au moins une partie des particules présentes contre la première surface extérieure du tamis puisse être transférée sur la surface de transfert du substrat de transfert. De préférence, la couche de particules contre la surface de transfert est créée en plusieurs fois, par exemple par plusieurs éjections successives de particules contre la première surface extérieure du tamis.

La couche de particules peut alors être formée sur la surface de transfert du substrat de transfert. La surface de transfert du substrat de transfert peut être essentiellement plane et horizontale. Elle peut être orientée vers le bas ou vers le haut. C'est la couche de particules contre la surface de transfert qui est déposée contre la structure d'impression tridimensionnelle. La couche de particules contre la surface de transfert est préférentiellement continue, par exemple parce que la structure de particules contre la première surface extérieure du tamis était continue ou parce que plusieurs structures de particules différentes ont été utilisées pour former la couche de particules contre la surface de transfert. Le substrat de transfert peut comprendre un deuxième tamis, auquel cas le tamis contre lequel se trouve la structure de particules peut être appelé premier tamis.

Le système d'impression tridimensionnelle peut comprendre une pluralité de tamis . De préférence, chaque tamis manipule une poudre différente. Par exemple, les tamis peuvent comprendre une première surface extérieure convexe agencée pour tourner selon un axe de rotation. Les tamis peuvent être disposés de façon à ce que leurs axes de rotation soient parallèles. Les tamis peuvent aussi être disposés de façon à déposer les poudres dans deux directions différentes.

Cela permet que chaque tamis dépose une poudre différente sur la structure d'impression tridimensionnelle. Le système peut comprendre un, deux, trois, quatre,... tamis. De préférence, chaque tamis est utilisé pour déposer une poudre différente sur la structure d'impression tridimensionnelle. Elles peuvent avoir des granulométries, des matières, des formes différentes où être raclées à des épaisseurs différentes par exemple.

Le système d'impression tridimensionnelle peut comprendre en outre un moyen de rapprochement et d'éloignement du tamis et d'une structure d'impression tridimensionnelle.

Cela permet d'éloigner petit à petit la structure d'impression tridimensionnelle après la formation de chaque strate de particules. Par exemple, la structure d'impression tridimensionnelle peut être éloignée à chaque fois de préférence d'une distance entre 20 et 1000 µm, plus préférentiellement entre 50 et 200 µm. Cela peut être le tamis qui s'éloigne de la structure d'impression tridimensionnelle et/ou la structure d'impression tridimensionnelle qui s'éloigne du tamis.

L'invention propose également une méthode pour manipuler des particules conformément à la revendication 13.

Cela permet de créer une structure de particules contre la première surface extérieure du tamis ou par éjection à partir de celle-ci.

Dans un mode de réalisation l'invention où la première surface extérieure est convexe, la méthode inclut que la vitesse rotation du tamis et la vitesse de translation de la structure d'impression tridimensionnelle sont choisies pour que la différence de vitesses tangentielles soit nulle dans la zone de détachement où la poudre est éjectée du tamis vers la structure d'impression tridimensionnelle. Assurer une rotation plus ou moins rapide que la vitesse d'avance en translation de la structure d'impression tridimensionnelle permet de contrôler un débit de transfert de particules plus ou moins élevé.

Les avantages mentionnés pour le système s'appliquent mutatis mutandis à la méthode.

L'étape (c) peut comprendre le transport des particules par le flux de fluide de transport vers ou depuis des parties prédéterminées de la première surface extérieure du tamis. Cela permet de choisir quelles particules sont transportées. Le transport de particules peut résulter d'une rupture de forces d'adhésion entre les particules et le tamis. Dans le cadre du présent document, une onde sonore est considérée comme un flux de fluide de transport.

Cela permet que certains pixels de la première surface extérieure soient couverts de particules ou, au contraire, soient libérés des particules. Cela peut se faire par exemple en appliquant un masque dans les parties de la première surface extérieure où on ne veut pas de transport de particules. Cela peut aussi se faire en n'appliquant le flux de fluide de transport que dans les parties de la première surface extérieure où on veut un transport de particules.

L'étape (b) peut comprendre la fourniture de particules d'un premier type et d'un deuxième type et l'étape (c) comprend:
- une étape (c1) de transport, par le flux de fluide de transport, des particules du premier type vers ou depuis des premières parties prédéterminées de la première surface extérieure du tamis et
- une étape (c2) de transport, par le flux de fluide de transport, des particules du deuxième type vers ou depuis des deuxièmes parties prédéterminées de la première surface extérieure du tamis.

Un type de particules peut être spécifié par une caractéristique des particules ou un ensemble de caractéristiques des particules. Par exemple, des particules ayant des matériaux différents, des formes différentes, des distributions de taille différentes peuvent être de types différents. Une telle structure est une composition de différents types de particules.

Les particules du premier type peuvent être susceptibles d'être agglomérées par un procédé déterminé et les particules du deuxième type peuvent ne pas être susceptibles d'être agglomérées par ledit procédé. Par exemple, les particules du premier type sont susceptibles d'être frittées à une première température de frittage et les particules du deuxième type ne sont pas susceptibles d'être frittées à la première température de frittage.

Les particules du premier type peuvent être utilisées pour l'impression tridimensionnelle et les particules du deuxième type servent de support pour l'impression tridimensionnelle. Les particules du deuxième type peuvent être par exemple de la silice.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1a illustre un dispositif pour manipuler des particules utile pour comprendre la présente invention,
- la figure 1b illustre un dispositif pour manipuler des particules utile pour comprendre la présente invention,
- les figures 2a et 2b illustrent deux étapes d'utilisation d'un dispositif pour manipuler des particules utiles pour comprendre l'invention,
- les figures 3a à 3c illustrent trois étapes d'utilisation d'un dispositif pour manipuler des particules selon une réalisation de l'invention,
- les figures 4a à 4d illustrent quatre étapes d'utilisation d'un dispositif pour manipuler des particules utiles pour comprendre l'invention,
- la figure 5 illustre un dispositif pour manipuler des particules selon une réalisation utile pour comprendre l'invention,
- la figure 6 illustre une utilisation d'un dispositif pour manipuler des particules selon une réalisation de l'invention,
- les figures 7a et 7b illustrent une utilisation de la structure de particules dans une impression tridimensionnelle, selon une réalisation de l'invention,
- les figures 8a et 8b illustrent une utilisation de la structure de particules dans une impression tridimensionnelle, selon une réalisation de l'invention,
- la figure 9 illustre un dispositif pour manipuler des particules selon une réalisation utile pour comprendre l'invention,
- la figure 10 illustre un dispositif pour manipuler des particules selon une réalisation de l'invention,
- la figure 11 illustre une partie de la matrice de vannes 41 selon une réalisation de l'invention,
- la figure 12 illustre une partie de la matrice de vannes 41 selon une réalisation de l'invention,
- la figure 13 illustre un dispositif selon un mode de réalisation de l'invention où le tamis est cylindrique,
- la figure 14 illustre un dispositif selon un autre mode de réalisation de l'invention où le tamis est cylindrique, et
- les figures 15 et 16 illustrent un système comprenant au moins deux dispositifs pour manipuler des particules selon un mode de réalisation de l'invention.

### Modes de réalisation de l'invention

La présente invention est décrite avec des réalisations particulières et des références à des figures. Les dessins ou figures décrits ne sont que schématiques et ne sont pas limitants, l'objet de l'invention étant défini par les revendications.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

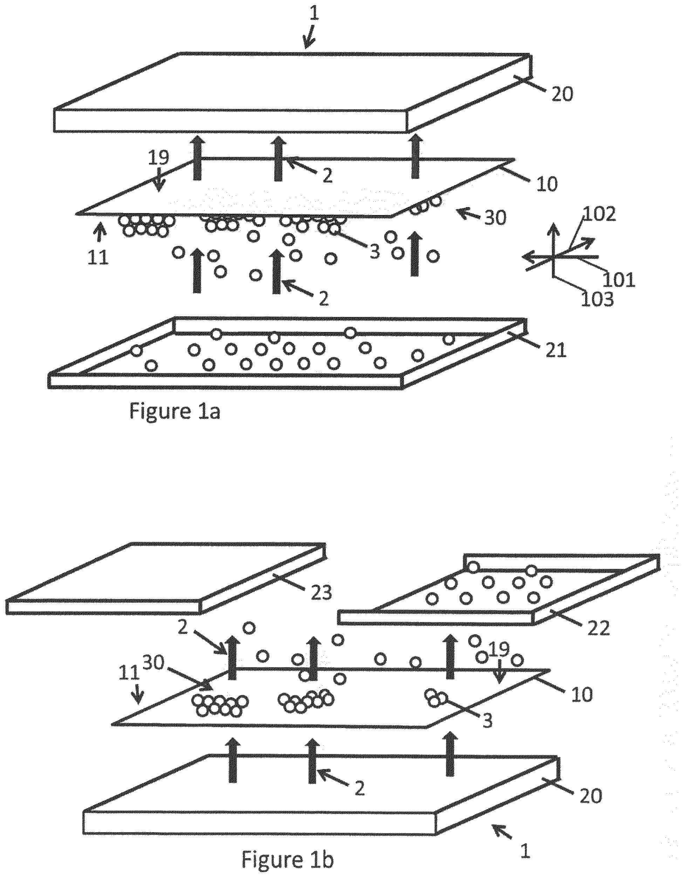

La figure 1a illustre un dispositif 1 pour créer une structure 30 de particules 3 utile pour comprendre la présente invention. La figure 1b illustre un dispositif 1 pour créer une structure 30 de particules 3 utile pour comprendre la présente invention. Le dispositif 1 comprend un générateur de flux 20 capable de générer un flux de fluide de transport. Le générateur de flux 20 peut être allumé ou éteint de façon à générer ou couper le flux de fluide de transport. Il est possible, tout en restant dans le cadre de l'invention, que le flux de fluide de transport 2 soit composé d'impulsions.

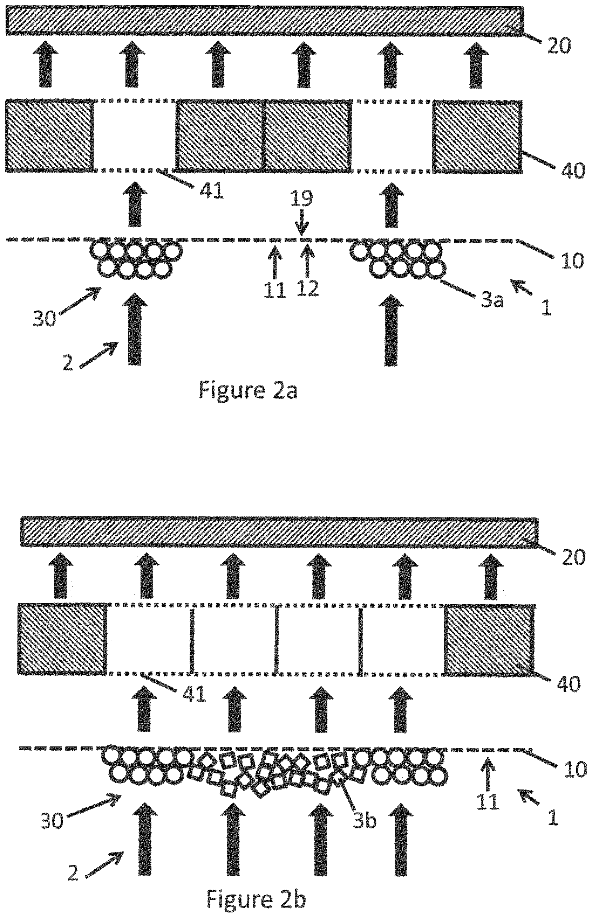

Le dispositif 1 comprend un tamis 10 qui est un support pour la structure 30 de particules 3. Le tamis 10 a une première surface extérieure 11 et une deuxième surface extérieure 19. Le tamis 10 a des trous 12 traversant (visibles figure 2a) qui débouchent sur la première surface extérieure 11 par des ouvertures. Les trous 12 débouchent aussi sur la deuxième surface extérieure 19. Les ouvertures bloquent les particules 3 en-dehors du tamis 10 et laissent passer le flux de fluide de transport 2 par les trous 12 à travers le tamis 10. Le dispositif 1 comprend préférentiellement un moyen d'alimentation en particules, par exemple sous la forme d'un réservoir 21 de particules 3 (figure 1a) ou d'un moyen d'étalement 22 des particules 3 (figure 1b).

Ce blocage des particules 3 peut par exemple avoir lieu lorsque le diamètre de la plus petite sphère inscrite dans n'importe laquelle des particules 3 est plus grand que le diamètre du plus petit cercle circonscrit à n'importe laquelle des ouvertures de la première surface extérieure 11. En outre, Le blocage peut aussi avoir lieu lorsque les particules 3 créent des ponts au-dessus d'une ouverture. Un pont peut survenir lorsque le diamètre des particules 3 est supérieur au tiers du diamètre des ouvertures. Les particules 3 constituent alors un obstacle pour les particules en amont, si bien qu'elles finissent par s'amasser.

Les particules 3 ont généralement une certaine distribution de taille, par exemple une distribution gaussienne. Par conséquent, certaines particules 3 risquent de traverser le tamis 10 et donc de ne pas faire partie de la structure 30 de particules.

De manière préférée, le fluide de transport 2 est un gaz, préférentiellement de l'air, de l'argon ou de l'azote. Le fluide de transport 2 peut être un liquide, par exemple de l'eau.

Dans une réalisation de l'invention, le tamis 10 comprend des éléments qui s'entrecroisent, de façon à bloquer tout corps sphérique de plus de 10 µm de diamètre, préférentiellement 1 µm de diamètre, plus préférentiellement 0,1 µm de diamètre. Toute particule 3 d'une taille sensiblement plus grande que ce diamètre est alors bloquée par le tamis 10.

Dans une réalisation de l'invention, le tamis 10 est une grille, c'est-à-dire qu'il comprend des éléments qui forment un maillage.

Dans une réalisation de l'invention, le tamis 10 est dans un matériau biocompatible. Préférentiellement, le tamis 10 est dans un matériau compatible avec les contraintes d'un milieu d'impression 3D (bonne résistance à des hautes températures, aux chocs, à l'humidité et aux charges électrostatiques).

De manière préférée, la structure du tamis 10 est fixe dans le temps: il n'a pas de parties mobiles. De manière préférée, le tamis 10 n'a pas de fonction électrique. Il est possible, tout en restant dans le cadre de l'invention, que le tamis soit relié à la terre de façon à décharger des particules chargées.

Dans une réalisation de l'invention, la première surface extérieure 11 du tamis 10 est du côté opposé du tamis 10 par rapport au générateur de flux 20. Cela peut permettre que le tamis 10 protège le générateur de flux 20 de l'encrassement par des particules 3.

Le tamis 10 peut être fabriqué par au moins un des procédés suivants: tissage, perforations, photogravure chimique, électroformage, poudre ou fibres frittées, et fabrication d'une mousse.

Dans une réalisation de l'invention, la première surface extérieure 11 du tamis 10 s'étend essentiellement selon une première direction 101 et une deuxième direction 102 perpendiculaire à la première direction 101. Le générateur de flux 20 est alors agencé pour que le flux de fluide de transport 2 qu'il génère soit essentiellement selon une troisième direction 103 perpendiculaire aux première 101 et deuxième 102 directions. La structure 30 de particules 3 est alors essentiellement bidimensionnelle.

La structure 30 de particules 3 peut comprendre une couche continue de particules 3. Elle peut également comprendre des ilots de particules 3 séparés les uns des autres. La structure 30 de particules 3 peut comprendre plusieurs types de particules 3.

Le générateur de flux 20 permet préférentiellement de manipuler de nombreuses particules 3 à la fois, par exemple au moins dix particules 3 ou au moins cent particules 3. Il est aussi possible que le générateur de flux 20 permette de manipuler les particules 3 une à une.

Dans une réalisation de l'invention, le dispositif 1 comprend un dispositif d'égalisation, par exemple un racloir, permettant d'égaliser l'épaisseur de la structure 30 de particules 3.

Dans la réalisation illustrée à la figure 1a, le générateur de flux 20 comprend un dispositif d'aspiration prévu pour créer le flux de fluide de transport 2 depuis la première surface extérieure 11 vers le générateur de flux 20 (figures 2, 4, 5, 9 et 11). Cela permet d'aspirer vers la première surface extérieure 11 des particules 3 initialement situées de l'autre côté du tamis 10 par rapport au générateur de flux 20. Lorsque le générateur de flux 20 comprend un dispositif d'aspiration, le dispositif d'aspiration est préférentiellement situé plus haut que le tamis 10 et la structure 30 de particules 3 est formée sous le tamis 10.

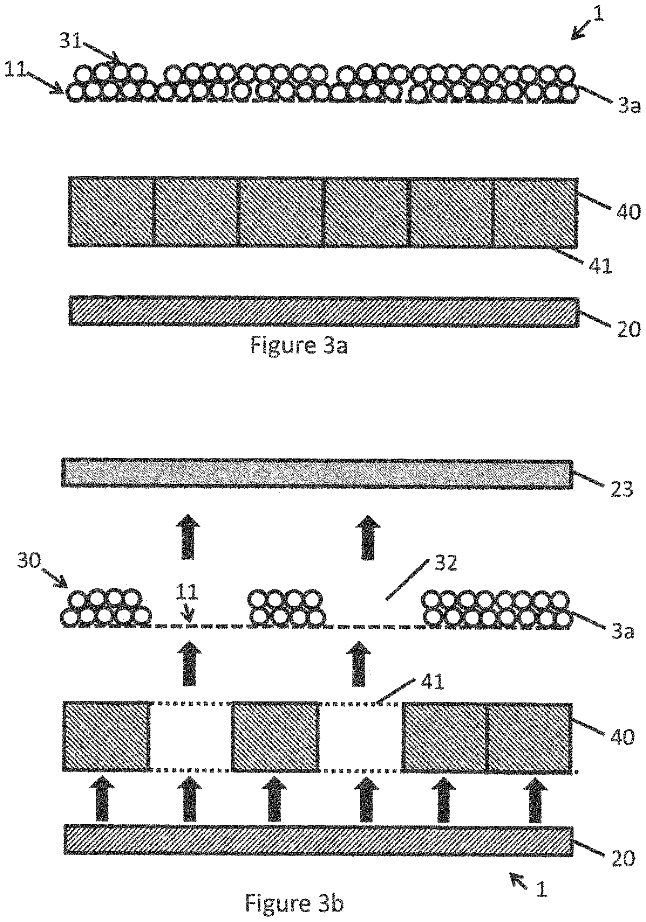

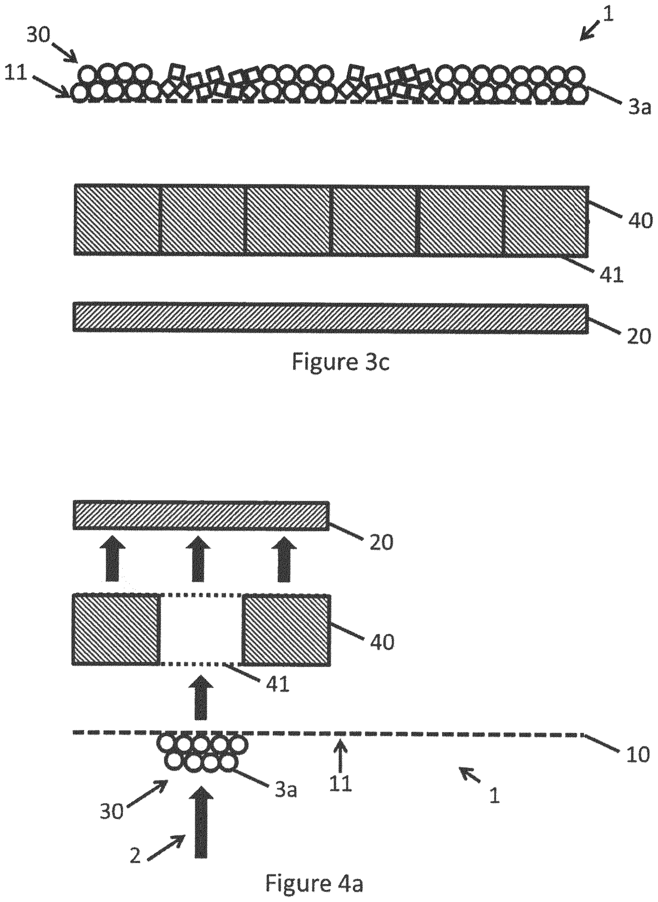

Dans la réalisation illustrée à la figure 1b, le générateur de flux 20 comprend un dispositif d'éjection prévue pour créer le flux de fluide de transport 2 depuis le générateur de flux 20 vers la première surface extérieure 11 (figures 3, 6, 10 et 12). Cela permet d'éjecter de la première surface extérieure 11 des particules 3 initialement situées de l'autre côté du tamis 10 par rapport au générateur de flux 20. Dans la réalisation illustrée à la figure 1b, le dispositif 1 comprend en outre un moyen d'étalement 22, qui peut comprendre un racloir, permettant d'alimenter la première surface extérieure 11 en particules 3. Le moyen d'étalement 22 étale des particules 3 sur la première surface extérieure 11 et ensuite le dispositif d'éjection éjecte au moins une partie des particules 3. Préférentiellement, les particules 3 éjectées sont collectées par un collecteur 23 de particules 3.

Préférentiellement, notamment lorsque la structure 30 de particules est en-dessous du tamis 10, la structure 30 de particules adhèrent à la première surface extérieure 11 parce que le flux de fluide de transport 2 est maintenu et/ou par au moins une des forces suivantes: gravité, force centripète, impulsion mécanique, force magnétique, force aérodynamique, force électrostatique, force de contact, force de Van der Waals, force capillaire, pression acoustique. Ces forces peuvent être locales, c'est-à-dire ne correspondre qu'à certaines parties de la première surface extérieure 11, ou réparties, c'est-à-dire correspondre à toute la première surface extérieure 11. En outre, ces mêmes forces peuvent être utilisées pour un détachement, local ou global, du tamis 10 des particules 3 faisant partie de la structure 30.

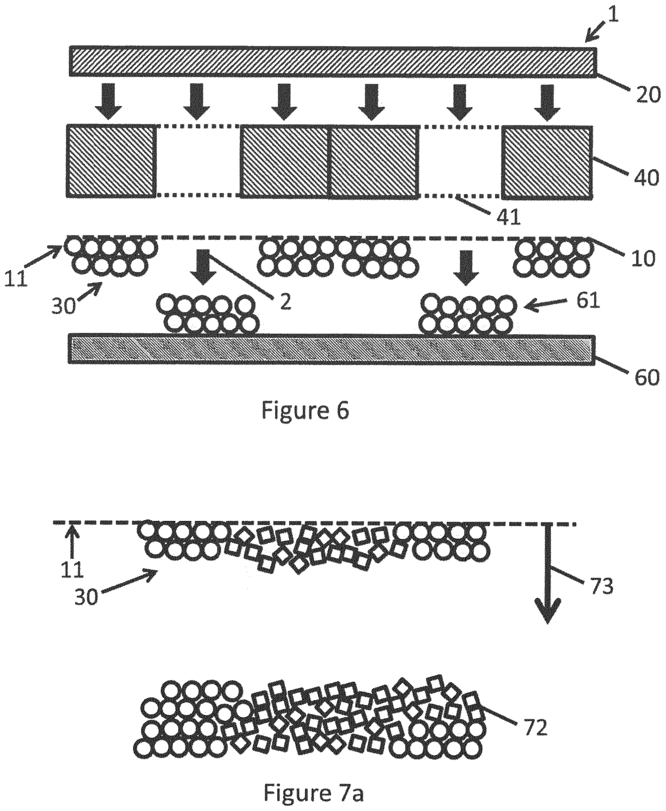

Selon la revendication 1, le dispositif 1 est agencé pour que le flux de fluide de transport 2 ne traverse que des parties prédéterminées de la première surface extérieure 11 du tamis 10. Cet agencement peut être réalisé des différentes manières qui vont être décrites ci-dessous. Cela peut notamment être réalisé à l'aide d'un masque 40 (figures 2, 3, 4 et 6), et/ou d'un moyen de déplacement du générateur de flux 20. Une partie de la première surface extérieure 11 traversée par le flux de fluide de transport 2 indépendamment du reste de la première surface extérieure 11 peut être appelée "pixel". Un pixel peut aussi être un ensemble de particules déposées sur un premier substrat 60 (figure 6) à partir d'un pixel de la première surface extérieure 11. Dans une réalisation de l'invention, un pixel fait entre 10 µm x 10 µm et 1 mm x 10 mm, préférentiellement un pixel fait approximativement 100 µm x 100 µm. Un pixel peut être carré, rectangulaire, en losange, en polygone, circulaire ou avoir toute autre forme. Des pixels peuvent avoir des tailles et/ou des formes différentes sur un même tamis 10. Un voxel est la partie de la structure 30 de particules qui correspond à un pixel. L'épaisseur du tamis 10 ainsi que d'autres paramètres peuvent avoir un impact sur l'épaisseur d'un voxel. Dans une réalisation de l'invention, les pixels se jouxtent. Dans une réalisation de l'invention, des pixels se chevauchent partiellement.

Le masque 40 comprend des parties ouvertes laissant passer le flux de fluide de transport 2 et des parties fermées ne laissant pas passer le flux de fluide de transport 2.

Dans une réalisation de l'invention, le masque 40 est dynamique, c'est-à-dire que la configuration de ses parties ouvertes et fermées peut être modifiée. Un tel masque 40 dynamique peut par exemple comprendre une matrice de vannes 41 (figures 2, 3, 4, 6, 11 et 12).

Dans une autre réalisation de l'invention, le masque 40 est statique, c'est-à-dire que la configuration de ses parties ouvertes et fermées ne peut pas être modifiée. Le dispositif 1 comprend alors préférentiellement un moyen de déplacement du générateur de flux 20.

Le masque 40 peut par exemple correspondre à toute la première surface extérieure 11, une ligne de pixels de la première surface extérieure 11, à deux à vingt lignes de pixels de la première surface extérieure 11,un à vingt-cinq pixels de la première surface extérieure 11 ou un seul pixel de la première surface extérieure 11. Préférentiellement, s'il correspond à une partie seulement de la première surface extérieure 11, il est dynamique ou le dispositif 1 comprend un moyen de déplacement du masque 40.

Dans une réalisation de l'invention, le générateur de flux 20 et le masque 40 correspondent à toute la première surface extérieure 11 du tamis 10. Le générateur de flux 20 et le masque 40 ne sont alors préférentiellement pas prévus pour se déplacer.

Les figures 2a et 2b illustrent deux étapes d'utilisation d'un dispositif 1 selon une telle réalisation de l'invention, dans un cas où générateur de flux 20 comprend un dispositif d'aspiration. Le masque 40 comprend une matrice de vannes 41. Les vannes 41 peuvent être ouvertes indépendamment les unes des autres, de façon à ce que le masque 40 laisse passer le flux de fluide de transport 2 là où les vannes 41 sont ouvertes.

Lors de l'étape illustrée à la figure 2a, deux premières vannes 41 sont ouvertes, et le flux de fluide de transport 2 ne traverse que les parties de la première surface extérieure 11 correspondant à ces deux premières vannes 41. Un premier réservoir (non-illustré) contenant des particules 3a d'un premier type peut alors être ouvert en face de la première surface extérieure 11, de façon à ce que les particules 3a du premier type soient aspirées par le flux de fluide de transport 2 et se placent contre les parties de la première surface extérieure 11 correspondant à ces premières deux vannes 41.

Lors de l'étape illustrée à la figure 2b, deux deuxièmes vannes 41 sont ouvertes, et le flux de fluide de transport 2 ne traverse que les parties de la première surface extérieure 11 correspondant à ces deux deuxièmes vannes 41. Un deuxième réservoir (non-illustré) contenant des particules 3b d'un deuxième type peut alors être ouvert en face de la première surface extérieure 11, de façon à ce que les particules 3b du deuxième type soient aspirées par le flux de fluide de transport 2 et se placent contre les parties de la première surface extérieure 11 correspondant à ces deux deuxièmes vannes 41. Les particules 3a du premier type restent contre la première surface extérieure 11 par exemple parce que les deux premières vannes 41 restent ouvertes et/ou grâce à au moins une des autres forces mentionnées plus haut.

Si la structure 30 de particules obtenues à ce moment est la structure 30 désirée, le procédé de formation de la structure 30 s'arrête. Sinon, le générateur de flux 20 peut être activé et des vannes 41 peuvent être ouvertes et pour aspirer des pixels de particules 3. Il est alors possible d'aspirer un troisième type de particules.

Les figures 3a à 3c illustrent trois étapes d'utilisation d'un dispositif 1 selon une réalisation de l'invention où le générateur de flux 20 et le masque 40 correspondent à toute la première surface extérieure 11 du tamis 10, dans un cas où le générateur de flux 20 comprend un dispositif d'éjection. Le masque 40 comprend une matrice de vannes 41. Les vannes 41 peuvent être ouvertes indépendamment les unes des autres, de façon à ce que le masque 40 laisse passer le flux de fluide de transport 2 là où les vannes 41 sont ouvertes. Bien que les figures 3a à 3c illustrent une situation où la structure 30 de particules est située au-dessus du tamis 10 et le dispositif d'éjection est en-dessous du tamis 10, il est possible, tout en restant dans le cadre de l'invention, que la structure 30 de particules soit située en-dessous du tamis 10 et le dispositif d'éjection soit au-dessus du tamis 10. Cela correspond à inverser l'ensemble de chacune des figures 3a à 3c dans un plan horizontal.

La figure 3a illustre la situation avant l'utilisation du générateur de flux 20. La première surface extérieure 11 est couverte d'une couche initiale 31 de particules 3a d'un premier type. La couche initiale 31 a été déposée au préalable, par exemple par un moyen d'étalement 22 (figure 1b). La couche initiale 31 ne comprend préférentiellement qu'un seul type de particules 3a.

Lors de l'étape illustrée à la figure 3b, deux premières vannes 41 sont ouvertes, et le flux de fluide de transport 2 ne traverse que les parties de la première surface extérieure 11 correspondant à ces deux premières vannes 41. Les particules 3a du premier type situées contre les parties de la première surface extérieure 11 correspondant à ces premières deux vannes 41 sont éjectées par le flux de fluide de transport 2, laissant des trous sans particules 32. Les particules 3a éjectées peuvent être collectées par le collecteur 23 de particules. Les particules 3a restant sur la première surface extérieure forment la structure 30 de particules à ce moment.

Lors de l'étape illustrée à la figure 3c, les trous sans particules 32 sont remplis par des particules 3b d'un deuxième type grâce à une alimentation en particules 3b, par exemple par le moyen d'étalement 22 (figure 1b). Si la structure 30 de particules obtenues à ce moment est la structure 30 désirée, le procédé de formation de la structure 30 s'arrête. Sinon, le générateur de flux 20 peut être activé et des vannes 41 peuvent être ouvertes et pour éjecter des voxels de particules 3. Il est alors possible d'étaler un troisième type de particules.

Dans une réalisation de l'invention, le générateur de flux 20 et le masque 40 ne correspondent qu'à une partie de la première surface extérieure 11. Préférentiellement, le générateur de flux 20 et le masque 40 correspondent à la même partie de la première surface extérieure 11. Le générateur de flux 20 et le masque 40 sont alors préférentiellement prévus pour se déplacer, préférentiellement parallèlement à la première surface extérieure 11.

Les figures 4a à 4d illustrent quatre étapes d'utilisation d'un dispositif 1 selon une telle réalisation de l'invention , dans un cas où générateur de flux 20 comprend un dispositif d'aspiration. Le masque 40 comprend préférentiellement une matrice de vannes 41. Le dispositif 1 comprend préférentiellement un moyen de déplacement du générateur de flux 20. Les vannes 41 sont ouvertes indépendamment les unes des autres, de façon à ce que le masque 40 laisse passer le flux de fluide de transport 2 là où les vannes 41 sont ouvertes.

Lors de l'étape illustrée à la figure 4a, une première vanne 41 est ouverte, et le flux de fluide de transport 2 ne traverse que les parties de la première surface extérieure 11 correspondant à cette première vanne 41. Un premier réservoir (non-illustré) contenant des particules 3a d'un premier type peut être ouvert en face de la première surface extérieure 11, de façon à ce que les particules 3a du premier type soient aspirées par le flux de fluide de transport 2 et se placent contre les parties de la première surface extérieure 11 correspondant à cette première vanne 41.

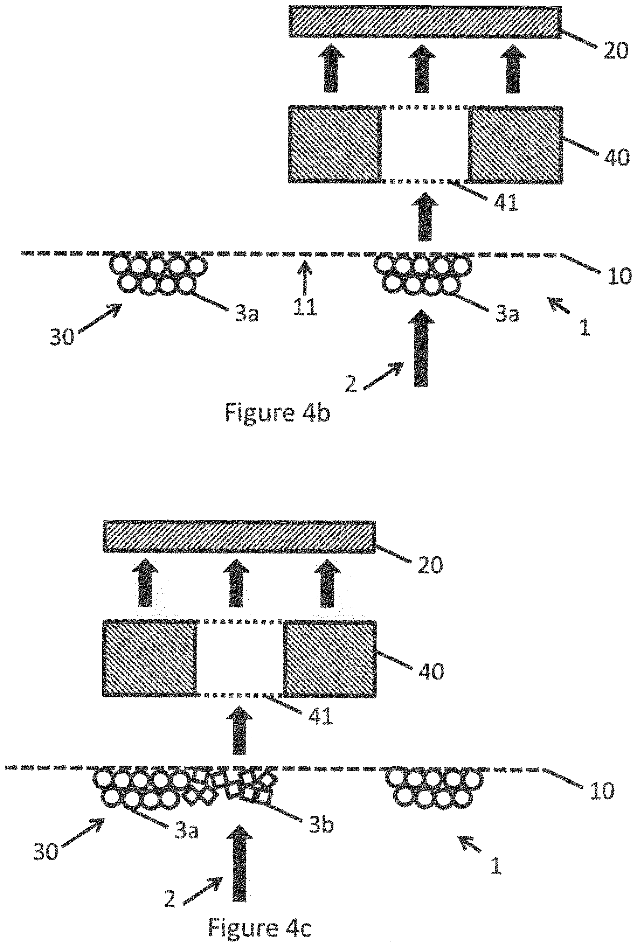

Lors de l'étape illustrée à la figure 4b, le générateur de flux 20 et le masque 40 se sont déplacés par rapport à la disposition représentée à la figure 4a. La première vanne 41 est ouverte, et le flux de fluide de transport 2 ne traverse que les parties de la première surface extérieure 11 correspondant à cette première vanne 41. Un premier réservoir (non-illustré) contenant des particules 3a d'un premier type peut être ouvert en face de la première surface extérieure 11, de façon à ce que les particules 3a du premier type soient aspirées par le flux de fluide de transport 2 et se placent contre les parties de la première surface extérieure 11 correspondant à cette première vanne 41 à ce moment.

Lors de l'étape illustrée à la figure 4c, le générateur de flux 20 et le masque 40 se sont déplacés par rapport à la disposition représentée à la figure 4b. La première vanne 41 est ouverte, et le flux de fluide de transport 2 ne traverse que les parties de la première surface extérieure 11 correspondant à cette première vanne 41. Un deuxième réservoir (non-illustré) contenant des particules 3b d'un deuxième type peut être ouvert en face de la première surface extérieure 11, de façon à ce que les particules 3b du deuxième type soient aspirées par le flux de fluide de transport 2 et se placent contre les parties de la première surface extérieure 11 correspondant à cette première vanne 41 à ce moment.

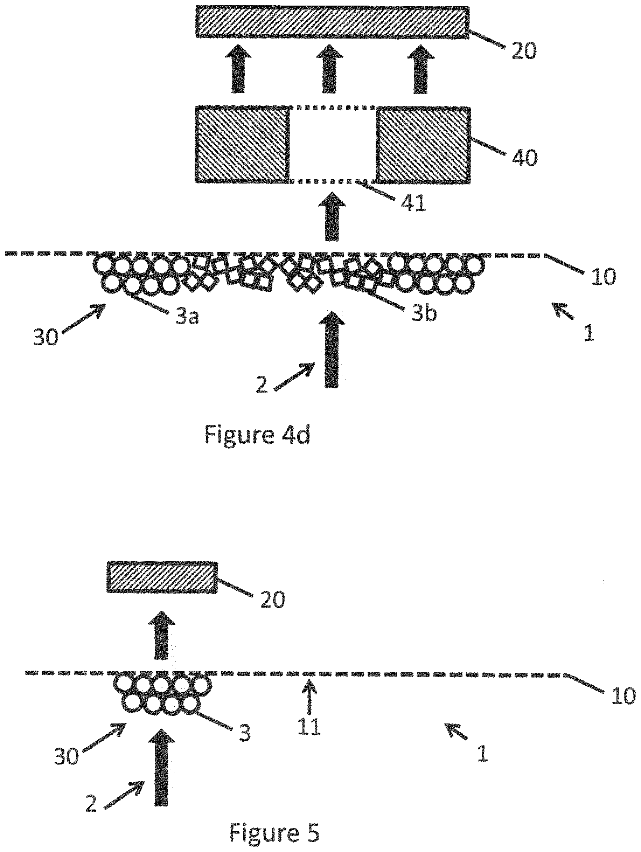

Lors de l'étape illustrée à la figure 4d, le générateur de flux 20 et le masque 40 se sont déplacés par rapport à la disposition représentée à la figure 4c. La première vanne 41 est ouverte, et le flux de fluide de transport 2 ne traverse que les parties de la première surface extérieure 11 correspondant à cette première vanne 41. Un deuxième réservoir (non-illustré) contenant des particules 3b d'un deuxième type peut être ouvert en face de la première surface extérieure 11, de façon à ce que les particules 3b du deuxième type soient aspirées par le flux de fluide de transport 2 et se placent contre les parties de la première surface extérieure 11 correspondant à cette première vanne 41 à ce moment.

Si la structure 30 de particules obtenues à ce moment est la structure 30 désirée, le procédé de formation de la structure 30 s'arrête. Sinon, le générateur de flux 20 peut être activé et des vannes 41 peuvent être ouvertes et pour aspirer des voxels de particules 3. Il est alors possible d'aspirer un troisième type de particules provenant d'un troisième réservoir.

Il est aussi possible qu'une autre vanne que la première vanne 41 soit ouverte lors d'une des étapes décrites en référence aux figures 4a à 4d.

Les particules 3a, 3b restent contre la première surface extérieure 11 par exemple grâce à au moins une des autres forces mentionnées plus haut.

Dans une réalisation non-illustrée, le générateur de flux 20 et le masque 40 ne correspondent qu'à une partie de la première surface extérieure 11 et le générateur de flux 20 comprend un dispositif d'éjection.

Dans une réalisation, le masque 40 n'est pas prévu pour se déplacer (il peut par exemple correspondre à toute la première surface extérieure 11) et le générateur de flux 20 est prévu pour se déplacer, par exemple grâce à un moyen de déplacement du générateur de flux 20.

Dans une réalisation, le dispositif 1 ne comprend pas de masque 40 et le générateur de flux 20 est prévu pour se déplacer, par exemple grâce à un moyen de déplacement du générateur de flux 20.

La figure 5 illustre un dispositif 1 selon une telle réalisation. Le générateur de flux 20 est agencé pour que le flux de fluide de transport 2 ne traverse qu'un pixel de la première surface extérieure 11. Le générateur de flux 20 se déplace et les pixels de la première surface extérieure 11 sont ainsi adressés les uns à la suite des autres pour se couvrir de particules 3. L'alimentation en particules peut par exemple se faire via un réservoir de particules se déplaçant en-dessous du tamis 10 en parallèle avec le générateur de flux 20.

Dans une réalisation de l'invention non-illustrée, le dispositif 1 ne comprend pas de masque 40 et le générateur de flux 20 est prévu pour se déplacer, par exemple grâce à un moyen de déplacement du générateur de flux 20 et le générateur de flux 20 comprend un dispositif d'éjection.

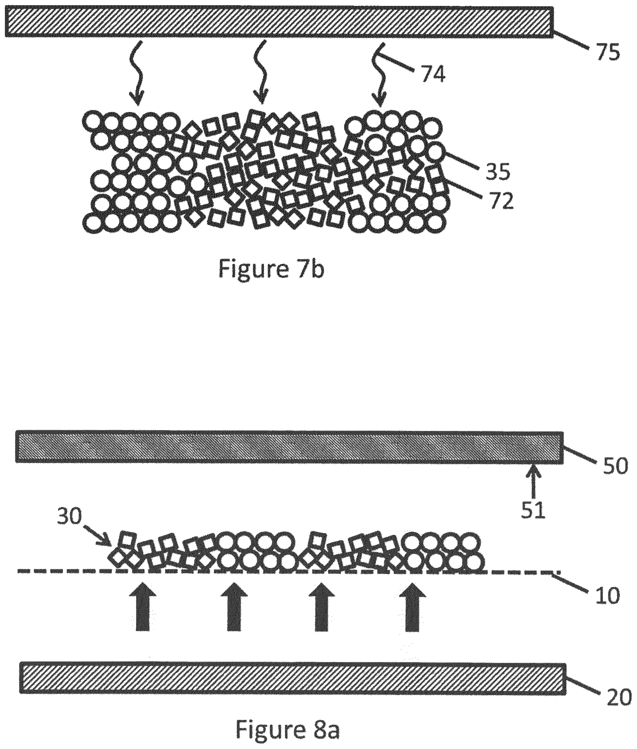

Dans une réalisation de l'invention, par exemple celle illustrée à la figure 6, des parties prédéterminées de la structure 30 présente contre le tamis 10 sont sélectivement transférées sur la surface d'un premier substrat 60, grâce au flux de fluide de transport 2 généré par le générateur de flux 20 qui comprend un dispositif d'éjection. Il est possible que l'éjection des particules soit réalisée par pression acoustique. Ce transfert peut être par exemple réalisé pixel par pixel. Le premier substrat 60 peut comprendre une partie supérieure d'une structure d'impression tridimensionnelle 72 (figure 7).

Selon un mode de réalisation possible de l'invention, plusieurs transferts successifs ont lieu, depuis la structure 30 de particules vers la surface du premier substrat 60.

Selon un mode de réalisation possible de l'invention, une première structure 30 uniforme et ne comprenant qu'un premier type de particules 3a est d'abord formée sur ou sous le tamis 10. Puis des parties prédéterminées de la première structure 30 sont transférées sur le premier substrat 60. Ensuite, le reste de la première structure 30 est enlevé du tamis 10 et une deuxième structure 30 uniforme et ne comprenant qu'un deuxième type de particules 3b est formée sur ou sous le tamis 10 et des parties prédéterminées de la deuxième structure 30 sont transférées sur le premier substrat 60. Le processus peut se répéter.

II est ainsi possible de réaliser une couche de particules comprenant des ilots 61 de différents types de particules sur le premier substrat 60. Cette couche pourra par la suite être utilisée pour une impression tridimensionnelle, à la place de la structure 30 de particules située contre la première surface extérieure 11 du tamis 10.

Dans une réalisation de l'invention, le masque 40 est une matrice comprenant dix colonnes et cent rangées de vannes 41 pneumatiques électrostatiques espacées de 1mm l'une de l'autre. Les colonnes sont décalées verticalement l'une de l'autre de 100 µm afin d'obtenir une résolution de 100 µm. Le masque 40 fait approximativement 10 cm sur 1cm. Le masque 40 et le générateur de flux 20 sont couplés de façon à se déplacer en même temps. Le masque 40 et le générateur de flux 20 balayent toute la première surface extérieure 11 du tamis 10 afin de composer une structure 30 de poudres contre le tamis 10 ou une couche de poudres contre le premier substrat 60.

Le dispositif 1 peut être utilisé pour une impression tridimensionnelle. Par exemple, le premier type de particules 3a peut être adéquat pour former un objet par impression tridimensionnelle grâce à un frittage et le deuxième type de particules 3b peut être une poudre de support qui n'est pas frittée. Notamment, les particules du premier type 3a peuvent être susceptibles d'être frittées à une première température de frittage et les particules du deuxième type 3b peuvent ne pas être susceptibles d'être frittées à la première température de frittage ou être inertes. Les particules 3b du deuxième type peuvent servir de support pour les strates supérieures lors de l'impression tridimensionnelle et être récupérées à la fin de l'impression tridimensionnelle.

Dans une réalisation de l'invention, les particules 3a du premier type sont des particules de poudre SLS prévues pour un frittage laser. Dans une réalisation de l'invention, les particules 3a du premier type sont en polymère thermoplastique, par exemple PA12. Dans une réalisation de l'invention, les particules 3b du deuxième type sont en céramique, plâtre ou alumine.

Les figures 7a et 7b illustrent une utilisation de la structure 30 de particules 3 dans une impression tridimensionnelle, selon une réalisation de l'invention.

La figure 7a représente le tamis 10 sous lequel la structure 30 de particules 3 est formée et une structure d'impression tridimensionnelle 72 qui est un objet en cours d'impression tridimensionnelle. La structure d'impression tridimensionnelle 72 comprend de nombreuses particules qui sont déjà agglomérées ensemble. En d'autres termes, la d'impression tridimensionnelle 72 comprend un empilement de strates déjà agglomérées. Un moyen de déposition de la structure 30 de particules 3 permet de déposer la structure 30 de particules 3 sur la structure d'impression tridimensionnelle 72. La structure 30 de particules 3 devient alors une strate 35 de particules 3. Les particules 3 de la strate 35 peuvent alors être agglomérées (figure 7b) avec la structure d'impression tridimensionnelle 72 de façon à former une nouvelle structure d'impression tridimensionnelle sur laquelle pourra être déposée une autre structure 30 de particules 3. L'agglomération peut être effectuée par un moyen d'agglomération 75, qui par exemple chauffe ou irradie la strate 35 de particules 3. L'agglomération peut être adéquate pour agglomérer les particules du premier type 3a mais pas les particules du deuxième type 3b.

Dans une réalisation de l'invention, le moyen d'agglomération 75 comprend un laser. Dans une réalisation de l'invention, le moyen d'agglomération 75 comprend un moyen d'émission de rayonnement infrarouge (par exemple une lampe halogène), qui peut être uniforme sur l'ensemble de la strate 35 de particules 3.

Le moyen de déposition permet préférentiellement de déplacer le tamis 10 avec la structure 30 de particules 3 depuis une zone de formation, où la structure 30 de particules 3 avait été formée, vers une zone d'impression où se situe la structure d'impression tridimensionnelle 72. Ce premier déplacement peut par exemple être horizontal et/ou vertical. Le moyen de déposition permet préférentiellement de déplacer le tamis 10 avec la structure 30 de particules 3 vers la structure d'impression tridimensionnelle 72 comme indiqué par la flèche 73 à la figure 7a.

Le moyen de déposition permet aussi préférentiellement de détacher la structure 30 de particules 3 de la première surface extérieure 11 du tamis 10. Le moyen de déposition peut être agencé pour détacher toute la structure 30 de la première surface extérieure 11 en une fois, ou de détacher des parties choisies de la première surface extérieure 11.

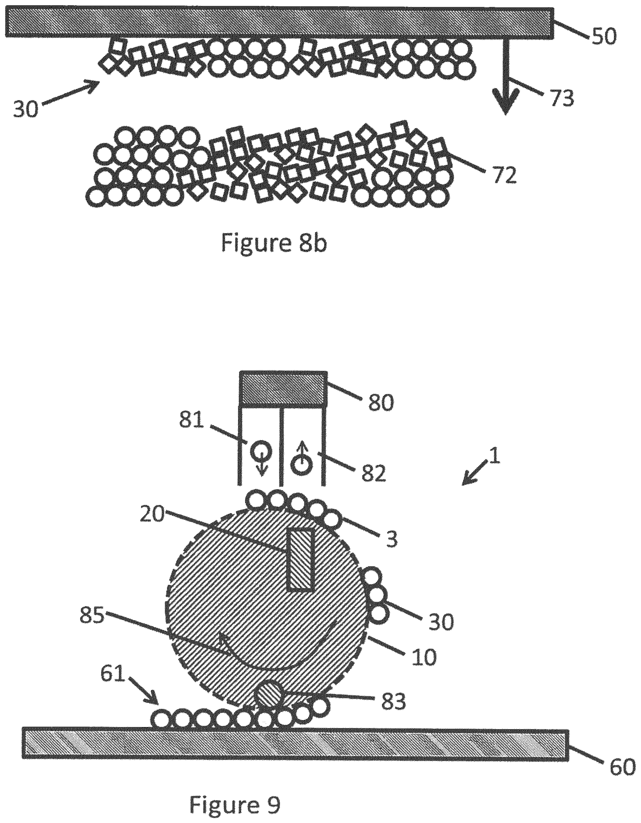

Les figures 8a et 8b illustrent une utilisation de la structure 30 de particules 3 dans une impression tridimensionnelle.

La structure 30 de particules présente sur la première surface extérieure 11 est d'abord transférée sous une surface de transfert 51 du substrat de transfert 50 mobile. Cela peut par exemple être réalisé à l'aide d'un dispositif d'éjection du générateur de flux 20.

Ensuite, le substrat de transfert 50 est déplacé de façon à déposer la structure 30 de particules 3 sur la structure d'impression tridimensionnelle 72 comme indiqué par la flèche 73 à la figure 8b. Le procédé d'agglomération illustré à la figure 7b peut alors être utilisé.

Lorsque l'impression tridimensionnelle est terminée, si les particules 3b du deuxième type n'ont pas été agglomérées, elles se détachent de l'objet imprimé.

La figure 9, utile pour comprendre l'invention, illustre un dispositif 1 dans lequel le tamis 10 est un cylindre agencé pour tourner selon un axe de cylindre comme indiqué par la flèche 85. La première surface extérieure 11 du tamis 10 est cylindrique. Préférentiellement, le générateur de flux 20 génère un flux de fluide de transport 2 ayant au moins une composante perpendiculaire à l'axe de cylindre. L'alimentation en particules 3 est assurée par un élément d'alimentation 80. L'élément d'alimentation 80 comprend un canal d'alimentation 81 pour envoyer des particules 3 vers la première surface extérieure 11, un racloir (non-illustré) et un canal de collecte 82 pour récupérer les particules 3 en surplus. Le générateur de flux 20 se trouve à l'intérieur du cylindre formé par le tamis 10. Il contrôle le flux de fluide de transport 2 pour déterminer les parties de la première surface extérieure 11 sur lesquelles les particules 3 sont déposées. Le générateur de flux 20 comprend préférentiellement un dispositif d'éjection.

La structure 30 de particules 3 est maintenue sur la première surface extérieure 11 grâce à une adhésion répartie sur la première surface extérieure 21. Elle est détachée de la première surface extérieure 11 grâce à un cylindre de décrochage 83 qui permet de rompre localement les forces d'adhésion entre la première surface extérieure 11 et les particules 3. Les particules 3 détachées se déposent alors sur le premier substrat 60.

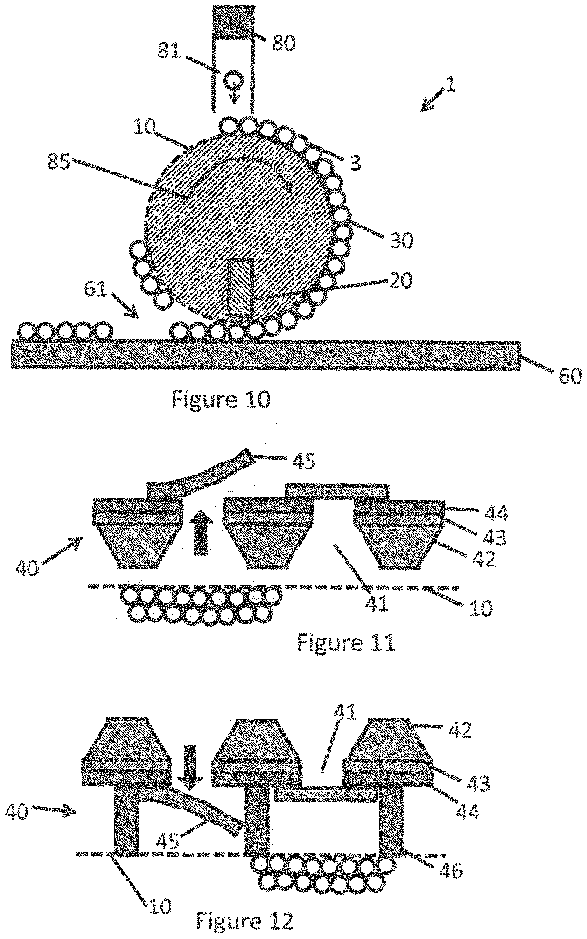

Dans une réalisation de l'invention illustrée à la figure 10, le générateur de flux 20 se trouve face au premier substrat 60. L'élément d'alimentation 80 dépose en continu des particules 3 sur le tamis. Le tamis 10 cylindrique apporte en continu des particules 3 face au générateur de flux 20. Les particules 3 sont sélectivement déposées sur le premier substrat 60 par éjection grâce au contrôle du générateur de flux 20, par exemple si celui-ci comprend un dispositif d'éjection.

La figure 11 illustre une partie de la matrice de vannes 41 selon une réalisation de l'invention. La figure 12 illustre une partie de la matrice de vannes 41 selon une réalisation de l'invention. Chaque vanne comprend préférentiellement une partie rigide 42, une première électrode 43, une partie diélectrique 44 et une deuxième électrode 45. La deuxième électrode 45 est flexible et est prévue pour s'ouvrir et se fermer. Les deuxièmes électrodes 45 peuvent par exemple être réalisées à l'aide d'une couche sacrificielle ou par assemblage. Les vannes 41 sont préférentiellement disposées selon un réseau de lignes et colonnes. Les vannes 41 peuvent préférentiellement être adressées par adressage passif.

La figure 11 correspond à un cas où le générateur de flux 20 comprend un dispositif d'aspiration.

La figure 12 correspond à un cas où le générateur de flux 20 comprend un dispositif d'éjection. Dans une réalisation de l'invention, des séparateurs 46 sont prévus dans l'espace entre le tamis 10 et la matrice de vannes 41, pour éviter que la deuxième électrode 45 ne touche le tamis 10.

De façon générale chaque vanne 41 peut comprendre un micro-actuateur et/ou une micro-valve pneumatique MEMS ou PCB. Un tel micro-actuateur peut par exemple être électrostatique, thermique, électromagnétique, piézoélectrique ou autre. La matrice de vannes 41 peut être par exemple réalisée par des techniques de micro-usinage à partir d'un wafer de silicium. Chaque vanne 41 peut comprendre une cavité, par exemple réalisée par gravure anisotrope grâce à du KOH ou une technique de gravure ionique réactive profonde. Chaque vanne 41 peut comprendre des électrodes réalisées par des techniques de déposition LPCVD (dépôt chimique en phase vapeur à basse pression).

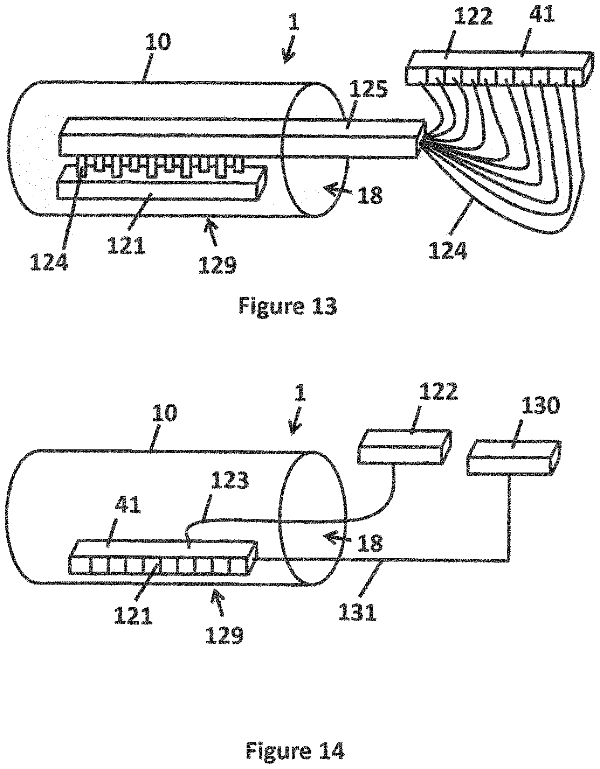

La figure 13 illustre un dispositif 1 selon un mode de réalisation de l'invention où le tamis 10 est cylindrique. La figure 14 illustre un dispositif 1 selon un autre mode de réalisation de l'invention où le tamis 10 est cylindrique. Toute autre forme du tamis 10 est possible. Par exemple toute forme telle que la première surface extérieure du tamis 10 est convexe et délimite au moins partiellement un espace intérieur 18. Le tamis 10 comprend une zone de détachement 129 où les particules se séparent de la première surface extérieure 11. Cette zone de détachement 129 est de préférence située vers le bas, par exemple en face de la structure d'impression tridimensionnelle 72. Le générateur de flux 20 est de préférence un dispositif d'éjection.

Le générateur de flux 20 comprend une première partie 121 située à l'intérieur du tamis 10 cylindrique. La première partie 121 comprend une tête d'impression située à proximité de la zone de détachement 129. De préférence, la tête d'impression est située entre l'axe du tamis 10 cylindrique et la zone de détachement 129.

De préférence, la première partie 121 du générateur de flux 20 comprend une pluralité d'ouvertures dirigées vers la première surface extérieure 11 du tamis 10, et en particulier vers la zone de détachement 129. Chacune des ouvertures permet d'éjecter ou d'aspirer un élément de flux de fluide de transport. Ainsi, il est possible de décider quelles particules sont éjectées du tamis 10 ou aspirées sur le tamis 10. Les ouvertures sont préférentiellement disposées en quinconce, de façon à ce que les pixels de différentes lignes soient décalés.

La première partie 121 du générateur de flux 20 est connectée de façon fluidique à au moins un moyen de communication fluidique 123. Ce moyen de communication fluidique 123 peut par exemple comprendre une pluralité de tuyaux 124 (figure 13). Le moyen de communication fluidique 123 sort du tamis 10 cylindrique par une extrémité de celui-ci. De préférence, les tuyaux 124 passent dans un conduit rigide 125 pour sortir du tamis 10 cylindrique (figure 13).

Le générateur de flux 20 comprend une deuxième partie 122 située à l'extérieur du tamis 10 cylindrique.

Dans le mode de réalisation de l'invention illustré à la figure 13, la deuxième partie 122 du générateur de flux 20 comprend des vannes 41, par exemple disposées en une matrice de vannes 41. Chaque vanne 41 est connectée à un tuyau 124. Les vannes 41 permettent de contrôler des éléments de flux de fluide qui sortent des ouvertures de la première partie 121 du générateur de flux 20. Ainsi, il est possible de contrôler les pixels de particules qui se détachent de la première surface extérieure du tamis 10 et se déposent sur la structure d'impression tridimensionnelle 72 ou tout autre support situé sous la zone de détachement.

Le dispositif 1 comprend de préférence entre 10 et 500 tuyaux 124, plus préférentiellement entre 50 et 200 tuyaux 124. De préférence, les sorties des tuyaux 124 vers la zone de détachement 129 sont disposées en quinconce, de façon à augmenter la résolution de la déposition.

Le dispositif 1 comprend de préférence un moyen de refroidissement des vannes 41.

Dans le mode de réalisation de l'invention illustré à la figure 14, la première partie 121 du générateur de flux 20 comprend des vannes 41, par exemple disposées en une matrice de vannes 41. Les vannes 41 sont reliées fluidiquement par le moyen de communication fluidique 123 à la deuxième partie 122 du générateur de flux 20. De préférence, le moyen de communication fluidique 123 comprend un seul tuyau. Néanmoins, il est possible, tout en restant dans le cadre de l'invention, qu'il en comporte une pluralité. Les vannes 41 permettent de contrôler des éléments de flux de fluide qui sortent des ouvertures de la première partie 121 du générateur de flux 20 en face de la zone de détachement 129. Ainsi, il est possible de contrôler les pixels de particules qui se détachent de la première surface extérieure du tamis 10 et se déposent sur la structure d'impression tridimensionnelle 72 ou tout autre support situé sous la zone de détachement.

La matrice de vannes 41 est de préférence connectée à une unité de contrôle 130 par un moyen de connexion électrique 130. Ce moyen de connexion électrique 130 peut être sans fil ou comprendre au moins un fil, qui passe alors de préférence par une extrémité du tamis cylindrique 10.

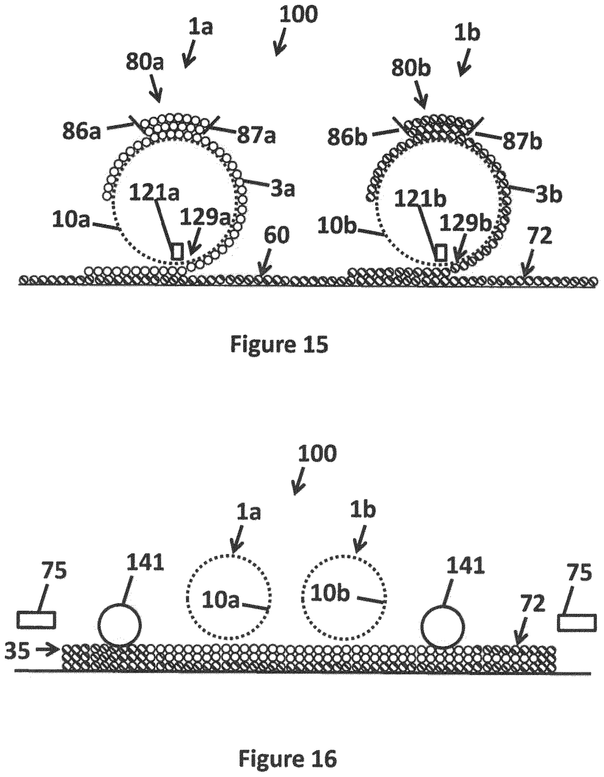

Les figures 15 et 16 illustrent un système 100 comprenant au moins deux dispositifs 1a, 1b pour manipuler des particules selon un mode de réalisation de l'invention. Ce système peut par exemple être utilisé dans une impression tridimensionnelle. Les tamis 10a, 10b et les générateurs de flux sont de préférence tels que décrits en référence à la figure 13 ou à la figure 14. Notamment, de préférence, les générateurs de flux comprennent chacun une première partie 121a, 121b située à l'intérieur du tamis 10 cylindrique, à proximité de la zone de détachement 129a, 129b. Ainsi, les éléments de flux de fluide émis par les premières parties 121a, 121b des générateurs de flux peuvent éjecter les particules 3a, 3b présentes sur la première surface extérieur des tamis 10a, 10b vers une position précise de la structure d'impression tridimensionnelle 72. Il est possible, tout en restant dans le cadre de l'invention, que le système 100 comprenne plus de deux dispositifs 1 selon l'invention. Les tamis 10a, 10b sont disposés parallèlement l'un à l'autre, de préférence avec leur axe dans un même plan horizontal.

De préférence, les dispositifs 1a, 1b comprennent chacun un élément d'alimentation 80a, 80b formé par un premier racloir 86a, 86b et un deuxième racloir 87a, 87b. Les particules 3a, 3b sont libérées sur la première surface extérieure des tamis 10a, 10b par les éléments d'alimentation 80a, 80b lorsque les tamis 10a, 10b tournent. De préférence, la position du deuxième racloir 87a, 87b par rapport à la première surface extérieure est choisie en fonction de l'épaisseur de la couche de particules 3a, 3b désirée sur la première surface extérieure. Le racloir peut être un rouleau racloir, par exemple un cylindre à contre-rotation, qui, de préférence, peut vibrer.

Les particules 3a, 3b sont alors retenue sur la première surface extérieure par un moyen d'aspiration (non-illustré).

De préférence, les particules 3a disposées par le premier dispositif 1a sont des particules 3a d'un premier type, par exemple susceptibles d'être agglomérées par un procédé déterminé. De préférence, les particules 3b disposées par le deuxième dispositif 1b sont des particules 3b d'un deuxième type, par exemple non-susceptibles d'être agglomérées par ce procédé déterminé.

De préférence, les tamis 10a, 10b tournent en maintenant fixe leur axe de rotation lorsqu'une strate 35 est déposée, et le premier substrat 60, qui sert de support à la structure d'impression tridimensionnelle 72 avance dans une direction ou dans l'autre. Il est aussi possible, tout en restant dans le cadre de l'invention, que les tamis 10a, 10b aient leur axe de rotation qui se déplace parallèlement au premier substrat 60 et que celui-ci soit fixe. Il est aussi possible que les tamis 10a, 10b et le premier substrat 60 se déplacent de façon coordonnée.

Les générateurs de flux des dispositifs 1a, 1b, par exemple les matrices de vannes 41, sont contrôlés de façon à obtenir la structure d'impression tridimensionnelle 72 désirée. De préférence, ils sont contrôlés pour que la strate 35 formée par les particules 3a, 3b déposées par les dispositifs 1a, 1b soit continue et ne comporte pas de trou.

Lorsqu'une strate 35 de particules a été déposée, et avant de déposer la strate 35 suivante, les tamis 10a, 10b sont éloignés de la structure d'impression tridimensionnelle 72 d'une distance de préférence égale à l'épaisseur de la strate 35. Cela permet de déposer la strate 35 suivante. Il est possible que des strates 35 successives aient des épaisseurs différentes.

Dans un mode de réalisation de l'invention, le système 100 comprend en outre au moins un rouleau de compaction 141 formant un moyen d'uniformisation de la hauteur de la strate de poudre déposée sur la structure d'impression tridimensionnelle. De préférence, le système 100 comprend deux moyens d'uniformisation, chacun étant situé d'un côté des tamis 10a,10b. Dans un mode de réalisation de l'invention, le système 100 comprend en outre au moins un moyen d'agglomération 75. De préférence, le système 100 comprend deux moyens d'agglomération 75, chacun étant situé d'un côté des tamis 10a, 10b, plus loin que les moyens d'uniformisation.

De préférence, le système 100 fonctionne de la façon suivante.

Un lit de particules du deuxième type 3b, qui ne sont pas susceptibles d'être agglomérées par le procédé réalisé par le moyen d'agglomération 75, est déposé sur le premier substrat 60. Le lit de particules forme la structure d'impression tridimensionnelle 72 de départ.

L'élément d'alimentation 80a est rempli de particules du premier type 3a, qui sont susceptibles d'être agglomérées par le procédé réalisé par le moyen d'agglomération 75. L'élément d'alimentation 80b est rempli de particules du deuxième type 3b.

Les tamis 10a, 10b tournent chacun autour de leur axe, entraînant des particules des éléments d'alimentation 80a, 80b qui sont maintenues dessus grâce à une aspiration d'air, par exemple réalisée par un ventilateur extérieur. Le débit d'air de l'aspiration est choisi en fonction du type de poudre. L'épaisseur de la couche de particules 3a, 3b sur le tamis 10 est de préférence entre 50 µm et 500 µm. Elle est déterminée notamment grâce à la position des deuxièmes racloirs 87a, 87b. L'épaisseur de la strate 35 peut être différente de l'épaisseur de la couche sur le tamis 10. En effet, les particules de la strate 35 peuvent s'étaler après déposition. Il est aussi possible de faire varier l'épaisseur de la strate 35 en variant la vitesse de rotation du tamis et/ou de translation de la structure d'impression tridimensionnelle 72.

Les tamis 10a, 10b se déplacent horizontalement dans une direction perpendiculaire à leur axe, de façon à parcourir la structure d'impression tridimensionnelle 72, tout en tournant sur eux-mêmes. De préférence, les vitesses de rotation et translation sont synchronisées pour que la vitesse relative du point le plus proche du tamis 10 et de la structure d'impression tridimensionnelle 72 soit nulle. Ainsi, les particules ne possèdent aucune vitesse tangentielle au tamis lors du transfert, ce qui permet un dépôt d'une plus grande précision.

Les particules qui n'ont pas été déposées remontent vers les éléments d'alimentation 80a, 80b et peuvent être utilisées par la suite.

De préférence, une fois que la strate 35 est déposée, elle est uniformisée par le rouleau de compaction 141, puis agglomérée par le moyen d'agglomération 75 de façon à intégrer la structure d'impression tridimensionnelle 72. La strate 35 suivante est alors déposée.

Il est possible que la strate 35 suivante soit déposée sur le chemin du retour par rapport à la strate qui vient d'être intégrée dans la structure d'impression tridimensionnelle 72. Par exemple, la déposition des strates (ainsi que la compaction et l'agglomération) peut se faire de droite à gauche, et de gauche à droite. Dans ce cas, il est préféré que le système comporte deux moyens d'uniformisation et deux moyens d'agglomération 75 comme illustré à la figure 16.

Des applications possibles du dispositif 1 selon l'invention concernent l'impression 3D, l'impression 2D et le dosage dans l'industrie pharmaceutique.
L'objet de l'invention est défini par les revendications.

## Revendications

1. Dispositif (1) pour manipuler des particules (3) et comprenant un générateur de flux (20) agencé pour générer un flux de fluide de transport (2), et un tamis (10) présentant une première surface extérieure (11) à partir de laquelle une structure (30) de particules (3) peut se former, le tamis (10) comprenant des trous (12) traversants débouchant par des ouvertures sur ladite première surface extérieure (11) et le flux de fluide de transport (2) étant prévu pour transporter les particules (3) depuis la première surface extérieure (11),
le dispositif (1) étant agencé pour que le flux de fluide de transport (2) ne traverse que des parties prédéterminées de la première surface extérieure (11) du tamis (10), le dispositif (1) comprenant une matrice de vannes (41), une vanne ouverte permettant de laisser passer le flux de fluide de transport (2) afin de souffler les particules (3) depuis la première surface extérieure (11),
**caractérisé en ce que** chaque vanne (41) est adressable indépendamment des autres vannes (41).

2. Dispositif (1) selon la revendication 1, **caractérisé en ce que** les ouvertures dans la première surface extérieure (11) du tamis (10) sont agencées pour que la première surface extérieure (11) bloque les particules (3) en-dehors du tamis (10), tout en laissant passer le flux de fluide de transport (2) via les trous (12) à travers le tamis (10).

3. Dispositif (1) selon l'une quelconque des revendications précédentes, **caractérisé en ce qu'**il comprend un moyen de déplacement du générateur de flux (20).

4. Dispositif (1) selon l'une quelconque des revendications précédentes, dans lequel les vannes de la matrice de vannes (41) sont des micro-parleurs, des vannes solénoïdes ou des MEMS, par exemple des MEMS piézo.

5. Dispositif (1) selon l'une quelconque des revendications précédentes, **caractérisé en ce que** le générateur de flux (20) comprend un dispositif d'éjection prévu pour créer le flux de fluide de transport (2) depuis le générateur de flux (20) vers la première surface extérieure (11).

6. Dispositif (1) selon la revendication précédente, dans lequel le dispositif d'éjection comprend un émetteur d'ondes sonores ou une soufflerie.

7. Dispositif (1) selon l'une quelconque des revendications précédentes, **caractérisé en ce que** la première surface extérieure (11) du tamis (10) est essentiellement une surface convexe, par exemple un cylindre, délimitant au moins partiellement un espace intérieur (18).

8. Dispositif (1) selon la revendication précédente, **caractérisé en ce que** le générateur de flux (20) comprend une première partie (121) située dans l'espace intérieur (18) et une deuxième partie (122) située en-dehors de l'espace intérieur (18), la première partie (121) et la deuxième partie (122) étant reliées de façon fluidique par un moyen de communication fluidique (123).

9. Dispositif (1) selon la revendication 8, **caractérisé en ce que** la première partie (121) du générateur de flux (20) comprend une pluralité d'ouvertures dirigées vers la première surface extérieure (11) du tamis (10), le dispositif (1) étant agencé pour qu'un élément de flux de fluide de transport passe dans une desdites ouvertures.

10. Dispositif (1) selon l'une quelconque des revendications précédentes, **caractérisé en ce qu'**il comprend en outre un moyen d'aspiration agencé pour retenir les particules sur la première surface extérieure (11).

11. Dispositif (1) selon l'une quelconque des revendications précédentes, **caractérisé en ce qu'**il comprend en outre un moyen de déplacement du tamis (10).

12. Système d'impression tridimensionnelle comprenant au moins une fois le dispositif (1) selon l'une quelconque des revendications précédentes, et un moyen d'agglomération (75).

13. Méthode pour manipuler des particules (3) et comprenant:
(a) la fourniture d'un dispositif (1) pour manipuler des particules (3) selon l'une quelconque des revendications 1 à 11
(b) la fourniture de particules (3) audit dispositif (1), et
(c) le transport des particules (3) par le flux de fluide de transport (2) depuis la première surface extérieure (11) du tamis (10).

## Patentansprüche

1. Vorrichtung (1) zur Manipulation von Partikeln (3), und einen Strömungsgenerator (20), der so eingerichtet ist, dass er eine Strömung von Transportfluid (2) erzeugt, und ein Sieb (10) umfassend, das eine erste Außenfläche (11) aufweist, von der ausgehend sich eine Struktur (30) von Partikeln (3) bilden kann, wobei das Sieb (10) Durchgangslöcher (12) umfasst, die durch Öffnungen an der ersten Außenfläche (11) münden, und die Strömung von Transportfluid (2) dafür vorgesehen ist, die Partikel (3) von der ersten Außenfläche (11) zu transportieren,
wobei die Vorrichtung (1) so eingerichtet ist, dass die Strömung von Transportfluid (2) nur vorbestimmte Teile der ersten Außenfläche (11) des Siebs (10) durchquert, wobei die Vorrichtung (1) eine Matrix von Ventilen (41) umfasst, wobei ein offenes Ventil es ermöglicht, die Strömung von Transportfluid (2) durchtreten zu lassen, um die Partikel (3) von der ersten Außenfläche (11) zu blasen,
**dadurch gekennzeichnet, dass** jedes Ventil (41) unabhängig von den anderen Ventilen (41) angesteuert werden kann.

2. Vorrichtung (1) nach Anspruch 1, **dadurch gekennzeichnet, dass** die Öffnungen in der ersten Außenfläche (11) des Siebs (10) so eingerichtet sind, dass die erste Außenfläche (11) die Partikel (3) außerhalb des Siebs (10) sperrt, während sie zugleich die Strömung von Transportfluid (2) über die Löcher (12) durch das Sieb (10) hindurchtreten lässt.

3. Vorrichtung (1) nach einem der vorstehenden Ansprüche, **dadurch gekennzeichnet, dass** sie ein Mittel zum Verlagern des Strömungsgenerators (20) umfasst.

4. Vorrichtung (1) nach einem der vorstehenden Ansprüche, wobei die Ventile der Matrix von Ventilen (41) Mikrolautsprecher, Magnetventile oder MEMS, zum Beispiel Piezo-MEMS, sind.

5. Vorrichtung (1) nach einem der vorstehenden Ansprüche, **dadurch gekennzeichnet, dass** der Strömungsgenerator (20) eine Ausstoßvorrichtung umfasst, die dafür vorgesehen ist, die Strömung von Transportfluid (2) vom Strömungsgenerator (20) zur ersten Außenfläche (11) zu erzeugen.

6. Vorrichtung (1) nach dem vorstehenden Anspruch, wobei die Ausstoßvorrichtung einen Schallwellensender oder ein Gebläse umfasst.

7. Vorrichtung (1) nach einem der vorstehenden Ansprüche, **dadurch gekennzeichnet, dass** die erste Außenfläche (11) des Siebs (10) im Wesentlichen eine konvexe Fläche, zum Beispiel ein Zylinder, ist, die mindestens teilweise einen Innenraum (18) begrenzt.

8. Vorrichtung (1) nach dem vorstehenden Anspruch, **dadurch gekennzeichnet, dass** der Strömungsgenerator (20) einen ersten Teil (121), der sich im Innenraum (18) befindet, und einen zweiten Teil (122) umfasst, der sich außerhalb des Innenraums (18) befindet, wobei der erste Teil (121) und der zweite Teil (122) strömungstechnisch durch ein Fluidkommunikationsmittel (123) miteinander verbunden sind.

9. Vorrichtung (1) nach Anspruch 8, **dadurch gekennzeichnet, dass** der erste Teil (121) des Strömungsgenerators (20) eine Vielzahl von Öffnungen umfasst, die zur ersten Außenfläche (11) des Siebs (10) gerichtet sind, wobei die Vorrichtung (1) so eingerichtet ist, dass ein Element der Strömung von Transportfluid durch eine der Öffnungen hindurchtritt.

10. Vorrichtung (1) nach einem der vorstehenden Ansprüche, **dadurch gekennzeichnet, dass** sie weiter ein Ansaugmittel umfasst, das so eingerichtet ist, dass es die Partikel an der ersten Außenfläche (11) zurückhält.

11. Vorrichtung (1) nach einem der vorstehenden Ansprüche, **dadurch gekennzeichnet, dass** sie weiter ein Mittel zum Verlagern des Siebs (10) umfasst.

12. 3D-Drucksystem, das mindestens einmal die Vorrichtung (1) nach einem der vorstehenden Ansprüche, und ein Agglomerationsmittel (75) umfasst.

13. Verfahren zur Manipulation von Partikeln (3), und umfassend:
(a) Bereitstellen einer Vorrichtung (1) zur Manipulation von Partikeln (3) nach einem der Ansprüche 1 bis 11,
(b) Bereitstellen von Partikeln (3) für die Vorrichtung (1), und
(c) Transportieren der Partikel (3) durch die Strömung von Transportfluid (2) von der ersten Außenfläche (11) des Siebs (10).

## Claims

1. Device (1) for manipulating particles (3) and comprising a flow generator (20) arranged to generate a transport fluid flow (2), and a screen (10) having a first outer surface (11) from which a particle (3) structure (30) can be formed, the screen (10) comprising through-holes (12) opening via openings onto said first outer surface (11) and the transport fluid flow (2) being provided to transport the particles (3) to or from the first outer surface (11),
the device (1) being arranged so that the transport fluid flow (2) only passes through predetermined portions of the first outer surface (11) of the screen (10), the device comprising a valve matrix (41), an open valve making it possible to allow the transport fluid flow (2), in order to blow the particles (3) from the first outer surface (11),
**characterised in that** each valve (41) can be addressed independently of the other valves (41).

2. Device (1) according to claim 1, **characterised in that** the openings in the first outer surface (11) of the screen (10) are arranged so that the first outer surface (11) blocks the particles (3) outside of the screen (10), while allowing the transport fluid flow (2) to pass via the holes (12) through the screen (10).

3. Device (1) according to any one of the preceding claims, **characterised in that** it comprises a means of movement of the flow generator (20).

4. Device (1) according to any one of the preceding claims, wherein the valves of the valve matrix (41) are micro-speakers, solenoid valves or MEMS, for example piezo MEMS.

5. Device (1) according to any one of the preceding claims, **characterised in that** the flow generator (20) comprises an ejection device provided to create the transport fluid flow (2) from the flow generator (20) to the first outer surface (11).

6. Device (1) according to the preceding claim, wherein the ejection device comprises a sound wave emitter or a blower.

7. Device (1) according to any one of the preceding claims, **characterised in that** the first outer surface (11) of the screen (10) is substantially a convex surface, for example a cylinder, delimiting at least partially an interior space (18).

8. Device (1) according to the preceding claim, **characterised in that** the flow generator (20) comprises a first portion (121) located in the interior space (18) and a second portion (122) located outside of the interior space (18), the first portion (121) and the second portion (122) being connected fluidically by a fluid communication means (123).

9. Device (1) according to claim 8, **characterised in that** the first portion (121) of the flow generator (20) comprises a plurality of openings directed towards the first outer surface (11) of the screen (10), the device (1) being arranged so that a transport fluid flow element passes into one of said openings.

10. Device (1) according to any one of the preceding claims, **characterised in that** it further comprises a suction means arranged to retain the particles on the first outer surface (11).

11. Device (1) according to any one of the preceding claims, **characterised in that** it further comprises a means of movement of the screen (10).

12. 3D printing system comprising at least one device (1) according to any one of the preceding claims, and an agglomeration means (75).

13. Method for manipulating particles (3) and comprising:
(a) the supplying of a device (1) for manipulating particles (3) according to any one of claims 1 to 11,
(b) the supplying of particles (3) to said device (1), and
(c) the transporting of particles (3) by the transport fluid flow (2) from the first outer surface (11) of the screen (10).
